(19) Europäisches Patentamt
European Patent Office
Office européen des brevets

(11) EP 4 276 148 A1

(12) **EUROPEAN PATENT APPLICATION**
published in accordance with Art. 153(4) EPC

(43) Date of publication:
**15.11.2023 Bulletin 2023/46**

(21) Application number: **22736742.2**

(22) Date of filing: **05.01.2022**

(51) International Patent Classification (IPC):
***C08L 23/00*** *(2006.01)* ***C08F 8/04*** *(2006.01)*
***C08F 297/04*** *(2006.01)* ***C08L 53/02*** *(2006.01)*
***C09J 123/00*** *(2006.01)* ***C09J 153/02*** *(2006.01)*

(52) Cooperative Patent Classification (CPC):
**C08F 8/04; C08F 287/00; C08F 297/04; C08L 23/00; C08L 51/06; C08L 53/02; C08L 53/025; C09J 123/00; C09J 151/06; C09J 153/02; C09J 153/025**

(86) International application number:
**PCT/JP2022/000074**

(87) International publication number:
**WO 2022/149574 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.01.2021 JP 2021002403**

(71) Applicant: **Kuraray Co., Ltd.**
**Kurashiki-shi, Okayama 710-0801 (JP)**

(72) Inventors:
- **KATO, Masahiro**
  **Kamisu-shi, Ibaraki 314-0197 (JP)**
- **SENDA, Yasushi**
  **Kamisu-shi, Ibaraki 314-0197 (JP)**
- **SATANI, Ryo**
  **Kamisu-shi, Ibaraki 314-0197 (JP)**

(74) Representative: **Müller-Boré & Partner Patentanwälte PartG mbB**
**Friedenheimer Brücke 21**
**80639 München (DE)**

# (54) RESIN COMPOSITION, ADHESIVE AGENT, AND COMPATIBILIZER

(57) The present invention relates to a resin composition containing a modified hydrogenated product (A) of a block copolymer containing a polymer block (A-1) having a structural unit derived from an aromatic vinyl compound and a polymer block (A-2) having a structural unit derived from a conjugated diene compound, and a polyolefin resin (B), wherein the modified hydrogenated product (A) has one or two or more functional groups selected from an alkoxysilyl group, a carboxy group, an amino group, a hydroxy group, an epoxy group, and a group derived from an acid anhydride, and the polymer block (A-2) has a vinyl bond amount of 50 to 99 mol%; and the resin composition further containing a polar resin (C).

EP 4 276 148 A1

## Description

### Technical Field

The present invention relates to a resin composition, an adhesive agent, and a compatibilizer.

### Background Art

It is known that a block copolymer having a polymer block containing a structural unit derived from an aromatic vinyl compound and a polymer block containing a structural unit derived from a conjugated diene compound, and a hydrogenated product thereof have vibration damping properties, and have been used as a vibration damping material. Further, it is known that a modified product obtained by modifying the block copolymer or a hydrogenated product thereof to introduce a functional group having reactivity can be used as a compatibilizer for compatibilizing a polar resin and a non-polar resin.

For example, PTLs 1 to 4 disclose that in a resin composition in which a polyolefin resin, a polyamide resin, and a compatibilizer are blended, a modified product of an olefin-based elastomer or a styrene-based elastomer is used as the compatibilizer. Among these, PTLs 1, 2, and 4 disclose that examples of the styrene-based elastomer include a block copolymer of an aromatic vinyl compound and a conjugated diene compound, and a hydrogenated product thereof.

Further, PTL 5 discloses a blow molding composition containing a mixture of a polyamide resin and a polyolefin resin containing a modified polyolefin, and discloses that the polyolefin resin may contain a polyolefin resin and a modified polyolefin.

### Citation List

### Patent Literature

PTL 1: WO 2017/169814 A
PTL 2: JP 2013-147645 A
PTL 3: JP 2013-147648 A
PTL 4: WO 2017/094738 A
PTL 5: JPH 6-234897 A

### Summary of Invention

### Technical Problem

However, as the use of the modified product of the block copolymer or the hydrogenated product thereof becomes widespread, there is a demand for a compatibilizer having characteristics of better compatibility between a polar resin and a non-polar resin and exhibiting good compatibility even in a small amount so as to be suitable for various applications.

On the other hand, there is a case where adhesiveness to a metal such as aluminum is required in consideration of, for example, use in an automotive component. However, a resin composition containing a modified product of a block copolymer or a hydrogenated product thereof has not been sufficiently studied from the viewpoint of adhesiveness to a metal.

Therefore, an object of the present invention is to provide a resin composition and an adhesive agent having high adhesiveness to a metal.

Another object of the present invention is to provide a resin composition in which one of a polar resin and a polyolefin resin is well dispersed in the other.

Still another object of the present invention is to provide a compatibilizer that exhibits good compatibility as a compatibilizer between a polar resin and a non-polar resin.

### Solution to Problem

As a result of intensive studies to solve the above problems, the present inventors have conceived the following present invention and found that the problems can be solved.

In other words, the present invention is as follows.

[1] A resin composition containing a modified hydrogenated product (A) of a block copolymer containing a polymer block (A-1) having a structural unit derived from an aromatic vinyl compound and a polymer block (A-2) having a structural unit derived from a conjugated diene compound, and a polyolefin resin (B), in which the modified hydrogenated product (A) has one or two or more functional group selected from an alkoxysilyl group, a carboxy group, an amino group, a hydroxy group, an epoxy group, and a group derived from an acid anhydride, and the polymer block (A-2) has a vinyl bond amount of 50 to 99 mol%.

[2] The resin composition as set forth in [1], in which the modified hydrogenated product (A) has a glass transition temperature of -30 to +30°C.

[3] The resin composition as set forth in [1] or [2], in which the polyolefin resin (B) is at least one resin selected from the group consisting of polypropylene, polyethylene, polymethylpentene, an ethylene-vinyl acetate copolymer, and a homopolymer or copolymer of an $\alpha$-olefin, and a copolymer of propylene and/or ethylene and an $\alpha$-olefin.

[4] The resin composition as set forth in any one of [1] to [3], in which a content of the polymer block (A-1) in the modified hydrogenated product (A) is 4 to 50% by mass.

[5] The resin composition as set forth in any one of [1] to [4], in which the modified hydrogenated product (A) has a weight average molecular weight of 50,000 to 400,000.

[6] The resin composition as set forth in any one of [1] to [5], in which the polymer block (A-2) has a hydrogenation rate of 50 to 99 mol%.

[7] The resin composition as set forth in any one of [1] to [6], in which a content of the functional group in the modified hydrogenated product (A) is 0.1 to 5.0 phr with respect to the modified hydrogenated product (A).

[8] The resin composition as set forth in any one of [1] to [7], in which the resin composition has a melt flow rate of 1 to 30 g/10 min, measured according to JIS K 7210 (2014) under the conditions of a temperature of 230°C and a load of 21 N.

[9] The resin composition as set forth in any one of [1] to [8], in which when the mass of the modified hydrogenated product (A) is Aa and the mass of the polyolefin resin (B) is Ba, Aa/Ba is 95/5 to 5/95.

[10] An adhesive agent containing the resin composition as set forth in any one of [1] to [9].

[11] The resin composition as set forth in any one of [1] to [8], further containing a polar resin (C).

[12] The resin composition as set forth in [11], in which the polar resin (C) is contained in an amount of 10 to 90% by mass with respect to the total mass of the resin composition.

[13] The resin composition as set forth in [11] or [12], in which in a matrix of one of the polyolefin resin (B) and the polar resin (C), domains having a mean size of 500 nm or less and containing the other of the polyolefin resin (B) and the polar resin (C) are dispersed.

[14] The resin composition as set forth in any one of [11] to [13], in which the polar resin (C) is at least one resin selected from the group consisting of a polyamide resin, a polyvinyl alcohol-based resin, a polyester-based resin, and a polycarbonate resin.

[15] The resin composition as set forth in any one of [11] to [14], in which a peak intensity of a loss tangent (tan $\delta$) at 0 to 50°C is 0.1 to 2.0, when measured in accordance with JIS K 7244-10 (2005) under the conditions of a strain amount of 0.1%, a frequency of 10 Hz, a measurement temperature of -100 to +150°C, and a temperature raising rate of 3°C/min.

[16] The resin composition as set forth in any one of [11] to [15], in which when the mass of the modified hydrogenated product (A) is Ab and the mass of the polyolefin resin (B) is Bb, Ab/Bb is 30/70 to 1/99.

[17] The resin composition as set forth in any one of [11] to [16], in which when the mass of the polyolefin resin (B) is Bb and the mass of the polar resin (C) is C, Bb/C is 90/10 to 10/90.

[18] A compatibilizer for compatibilizing a polar resin and a non-polar resin, the compatibilizer containing a modified hydrogenated product (A) of a block copolymer containing a polymer block (A-1) having a structural unit derived from an aromatic vinyl compound and a polymer block (A-2) having a structural unit derived from a conjugated diene compound, in which the modified hydrogenated product (A) has one or two or more functional group selected from an alkoxysilyl group, a carboxy group, an amino group, a hydroxy group, an epoxy group, and a group derived from an acid anhydride, and the polymer block (A-2) has a vinyl bond amount of 50 to 99 mol%.

Advantageous Effects of Invention

According to the present invention, it is possible to provide a resin composition and an adhesive agent having high adhesiveness to a metal.

Further, according to the present invention, it is possible to provide a resin composition in which one of a polar resin and a polyolefin resin is well dispersed in the other.

Furthermore, according to the present invention, it is possible to provide a compatibilizer that exhibits good

compatibility as a compatibilizer between a polar resin and a non-polar resin.

Brief Description of Drawings

Fig. 1 is enlarged cross-sectional photographs showing an example of morphology of a first resin composition (D1) and resin compositions of Comparative Examples.
Fig. 2 is a schematic cross-sectional view showing an example of a sea-island structure.
Fig. 3 is enlarged cross-sectional photographs showing an example of morphology of a second resin composition (D2) and resin compositions of Comparative Examples.
Fig. 4 is enlarged cross-sectional photographs showing an example of morphology of the second resin composition (D2) and resin compositions of Comparative Examples.
Fig. 5 is a diagram showing an example of viscoelastic characteristics of the second resin composition (D2).

Description of Embodiments

In the description herein, a preferable regulation can be arbitrarily selected, and a combination of preferable regulations can be said to be more preferable.
In the description herein, a description of "XX to YY" means "XX or more and YY or less".
In the description herein, with respect to a preferable numerical value range (for example, a range of a content or the like), a lower limit value and an upper limit value described in a stepwise manner can be independently combined. For example, from a description of "preferably 10 to 90, more preferably 30 to 60", the "preferred lower limit (10)" and the "more preferred upper limit (60)" can be combined to give "10 to 60".
In the description herein, "~ unit" (wherein "~" represents a monomer) means "structural unit derived from ~", and, for example, "propylene unit" means "structural unit derived from propylene".
In the description herein, for example, "(meth)acrylic acid" refers to both "acrylic acid" and "methacrylic acid", and other similar terms are the same.
In the description herein, the weight average molecular weight is a weight average molecular weight in terms of standard polystyrene obtained by gel permeation chromatography (GPC) measurement.
In the description herein, "BB containing AA as a main component" means that at least more than 50% by mass of AA is contained in BB.

[First Resin Composition (D1)]

A first resin composition according to an embodiment of the present invention contains a modified hydrogenated product (A) of a block copolymer containing a polymer block (A-1) having a structural unit derived from an aromatic vinyl compound and a polymer block (A-2) having a structural unit derived from a conjugated diene compound, and a polyolefin resin (B), in which the modified hydrogenated product (A) has one or two or more functional group selected from an alkoxysilyl group, a carboxy group, an amino group, a hydroxy group, an epoxy group, and a group derived from an acid anhydride, and the polymer block (A-2) has a vinyl bond amount of 50 to 99 mol%.
In the description herein, the first resin composition (D1) may be referred to as a "resin composition (D1)".
When the vinyl bond amount of the polymer block (A-2), that is, the total content of a 3,4-bond unit and a 1,2-bond unit in the polymer block (A-2) is within the above range, the resin composition (D1) easily exhibits excellent vibration damping properties, and in addition, the resin composition (D1) exhibits high adhesiveness to various materials, particularly to a metal.
Here, the vinyl bond amount is a value calculated by $^1$H-NMR measurement according to the method described in Examples.
In the case where the polymer block (A-2) is composed only of butadiene, the "content of a 3,4-bond unit and a 1,2-bond unit" is replaced with the "content of a 1,2-bond unit".
The resin composition (D1) has high adhesiveness to various materials, particularly to metals. The reason why the resin composition (D1) has excellent adhesiveness is not limited to this, but is assumed as follows.
In the resin composition (D1), since the solubility parameter (SP value) of the modified hydrogenated product (A) approaches the SP value of the polyolefin resin (B) by setting the vinyl bond amount of the polymer block (A-2) constituting the modified hydrogenated product (A) within a predetermined range, a fine co-continuous structure is formed because the modified hydrogenated product (A) and the polyolefin resin (B) exhibit good compatibility. In addition, as a result, the flexibility of the entire composition is ensured, the modified hydrogenated product (A) is uniformly dispersed in the resin composition (D1), and a sufficient amount of the modified hydrogenated product (A) is easily present even

in the vicinity of the surface of the composition. Therefore, it is assumed that the functional group of the modified hydrogenated product (A) introduced by the modification becomes easy to come into contact with the adherend, and as a result, the adhesiveness to a metal and various other materials becomes high.

<Morphology of Resin Composition (D1)>

A preferred aspect of the resin composition (D1) has a co-continuous structure in which the modified hydrogenated product (A) and the polyolefin resin (B) have a structure extending in a state where the modified hydrogenated product (A) and the polyolefin resin (B) are alternately adjacent to each other.
Fig. 1(a) is an enlarged cross-sectional photograph taken using an atomic force microscope (AFM), showing an example of the morphology of the resin composition (D1). In Fig. 1(a), a co-continuous structure extending along the direction from the upper left to the lower right is formed.
As described above, the modified hydrogenated product (A) exhibits good compatibility with the polyolefin resin (B). Therefore, the maximum value of the co-continuous structure formed in the resin composition (D1) and a molded article thereof is very fine, for example, about 10 to 500 nm in the length direction.

<Modified Hydrogenated Product (A)>

The modified hydrogenated product (A) contained in the resin composition (D1) is a modified hydrogenated product of a block copolymer containing a polymer block (A-1) having a structural unit derived from an aromatic vinyl compound and a polymer block (A-2) having a structural unit derived from a conjugated diene compound. The modified hydrogenated product (A) has one or two or more functional group selected from an alkoxysilyl group, a carboxy group, an amino group, a hydroxy group, an epoxy group, and a group derived from an acid anhydride. Further, the polymer block (A-2) has a vinyl bond amount of 50 to 99 mol%.
In the description herein, the group derived from an acid anhydride means a group having a structure obtained by dehydration condensation of two carboxylic acid groups contained in an acid anhydride, and when the acid anhydride is maleic anhydride, for example, a group having a structure shown below is used.

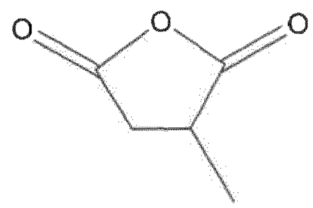

Hereinafter, the block copolymer may be represented by reference numeral (A0), and the hydrogenated product of the block copolymer (A0) may be represented by reference numeral (A1). Further, the hydrogenated product of the block copolymer (A0) may be referred to as a "hydrogenated block copolymer (A1)".
The modified hydrogenated product (A) is a modified product of a hydrogenated product (A1) of the block copolymer (A0) or a hydrogenated product of a modified product of the block copolymer (A0).
By using the block copolymer (A0) as a raw material of the modified hydrogenated product (A), mechanical properties such as vibration damping properties and impact resistance can be imparted to the resin composition (D1). In addition, since the block copolymer (A0) is hydrogenated, thermal stability is also easily increased.
Further, when the vinyl bond amount in the polymer block (A-2) (i.e., the content of a 3,4-bond unit and a 1,2-bond unit in the polymer block (A-2)) is 50 to 99 mol%, the vibration damping properties are enhanced, and a co-continuous structure in which the modified hydrogenated product (A) and the polyolefin resin (B) are alternately arranged in a narrow width is easily formed. Therefore, the characteristics such as the vibration damping properties and the impact resistance of the modified hydrogenated product (A) are easily expressed even in the resin composition (D1).
In addition, since a predetermined functional group is introduced by the modification, the resin composition (D1) has high adhesiveness to a metal and various other materials in combination with the above-described fine co-continuous structure.
Next, components of the block copolymer (A0) or the hydrogenated product (A1) thereof, a use ratio thereof, characteristics, and the like for obtaining the modified hydrogenated product (A) will be described. Although these are substances before modification, the modified hydrogenated product (A) also has the polymer block (A-1) and the polymer block (A-2) possessed by the block copolymer (A0) and the hydrogenated block copolymer (A1), and the main skeleton thereof does not change even when modification is performed. Therefore, the following description regarding the polymer block (A-1) and the polymer block (A-2) is also common to the modified hydrogenated product (A).

(Block Copolymer (A0))

The block copolymer (A0) has a polymer block (A-1) containing a structural unit derived from an aromatic vinyl compound and a polymer block (A-2) containing a structural unit derived from a conjugated diene compound. Hereinafter, the polymer block (A-1) and the polymer block (A-2) will be described.

(Composition of Polymer Block (A-1))

The polymer block (A-1) constituting the block copolymer (A0) preferably has a structural unit derived from an aromatic vinyl compound used as a monomer, from the viewpoint of mechanical properties such as vibration damping properties and impact resistance.

The polymer block (A-1) preferably contains more than 70% by mass of a structural unit derived from an aromatic vinyl compound (hereinafter, may be abbreviated as an "aromatic vinyl compound unit") in the polymer block (A-1), and from the viewpoint of mechanical properties such as impact resistance, the content is more preferably 80% by mass or more, still more preferably 90% by mass or more, even more preferably 95% by mass or more, and particularly preferably substantially 100% by mass. In other words, the content of the aromatic vinyl compound unit in the polymer block (A-1) is preferably more than 70% by mass and 100% by mass or less.

Further, the block copolymer (A0) preferably contains the structural unit derived from an aromatic vinyl compound only in the polymer block (A-1) from the viewpoint of dynamic physical properties. From the viewpoint of flexibility, the content of the structural unit derived from an aromatic vinyl compound in the block copolymer (A0) is preferably 4 to 50% by mass, more preferably 5 to 30% by mass, and still more preferably 6 to 16% by mass, and it is even more preferable that all the structural units derived from an aromatic vinyl compound in the block copolymer (A0) are contained in the polymer block (A-1).

Examples of the aromatic vinyl compound include styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, 6-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, silyl group-substituted styrene derivatives, indene, vinylnaphthalene, and N-vinylcarbazole. These aromatic vinyl compounds may be used alone, or two or more thereof may be used. Among these, from the viewpoint of production cost and physical property balance, styrene, α-methylstyrene, p-methylstyrene, and a mixture thereof are preferable, and styrene is more preferable.

The polymer block (A-1) may contain a structural unit derived from the other unsaturated monomer other than the aromatic vinyl compound (hereinafter, may be abbreviated as "other unsaturated monomer unit") as long as the object and effects of the present invention are not impaired, but the content thereof in the polymer block (A-1) is preferably 30 mol% or less, more preferably less than 20 mol%, still more preferably less than 15 mol%, even more preferably less than 10 mol%, yet still more preferably less than 5 mol%, and particularly preferably 0 mol%. In other words, the content of the other unsaturated monomer unit in the polymer block (A-1) is preferably 0 to 30 mol%.

Examples of the other unsaturated monomer include at least one selected from the group consisting of butadiene, isoprene, β-farnesene, 2,3-dimethylbutadiene, 1,3-pentadiene, 1,3-hexadiene, isobutylene, methyl methacrylate, methyl vinyl ether, β-pinene, 8,9-p-menthene, dipentene, methylene norbornene, 2-methylene tetrahydrofuran, and the like. When the polymer block (A-1) contains the other unsaturated monomer unit, the bonding form is not particularly limited, and may be either random or tapered.

The block copolymer (AO) may have at least one of the polymer blocks (A-1). In a case where the block copolymer (A0) has two or more polymer blocks (A-1), the polymer blocks (A-1) may be the same or different from each other. In the description herein, "the polymer blocks are different" means that at least one of the monomer unit constituting the polymer block, the weight average molecular weight, the stereoregularity, and in the case of having a plurality of monomer units, the ratio of each monomer unit and the copolymerization form (random, gradient or block) is different.

(Weight Average Molecular Weight of Polymer Block (A-1))

The weight average molecular weight (Mw) of the polymer block (A-1) is not particularly limited, but among the polymer blocks (A-1) contained in the block copolymer (A0), the weight average molecular weight of at least one polymer block (A-1) is preferably 3,000 to 60,000, and more preferably 4,000 to 50,000. By the fact that the block copolymer

(AO) has at least one polymer block (A-1) having a weight average molecular weight within the above range, it is possible to contribute to further improvement of vibration damping properties.

The weight average molecular weight is a weight average molecular weight in terms of standard polystyrene obtained by gel permeation chromatography (GPC) measurement.

(Content of Polymer Block (A-1))

The content of the polymer block (A-1) in the block copolymer (A0) is preferably 50% by mass or less, more preferably 30% by mass or less, still more preferably 16% by mass or less, and particularly preferably 14% by mass or less.

When the content is 50% by mass or less, it is possible to obtain a block copolymer (AO) or a hydrogenated block copolymer (A1) having appropriate flexibility and excellent vibration damping properties without deteriorating the peak top intensity of tan δ (hereinafter referred to as peak intensity in some cases). On the other hand, the lower limit value is preferably 4% by mass or more, more preferably 5% by mass or more, and still more preferably 6% by mass or more. If it is 4% by mass or more, it can be a block copolymer (A0) or a hydrogenated block copolymer (A1) having mechanical properties such as impact resistance, and handling properties such as molding processability and coating properties, which are suitable for various applications of the resin composition (D1) or the resin composition (D2) described later. In other words, the content of the polymer block (A-1) in the block copolymer (A0) or the hydrogenated block copolymer (A1) is preferably 4 to 50% by mass.

In addition, the content of the polymer block (A-1) in the block copolymer (A0) is a value obtained by $^{1}$H-NMR measurement, and more specifically, a value measured according to the method described in Examples.

In the present invention, the content of the polymer block (A-1) in the block copolymer (A0) is defined as the content of the polymer block (A-1) in the modified hydrogenated product (A).

(Composition of Polymer Block (A-2))

The polymer block (A-2) constituting the block copolymer (AO) has a structural unit derived from a conjugated diene compound (hereinafter, may be referred to as "conjugated diene compound unit") from the viewpoint of vibration damping properties, thermal stability, and the like.

It is preferable that the polymer block (A-2) contains 30 mol% or more of the conjugated diene compound unit. Among these, from the viewpoint of vibration damping properties and thermal stability, the polymer block (A-2) contains the conjugated diene compound unit in an amount of more preferably 50 mol% or more, still more preferably 65 mol% or more, even more preferably 80 mol% or more, yet still more preferably 90 mol% or more, and particularly preferably substantially 100 mol%. In other words, the content of the conjugated diene compound unit in the polymer block (A-2) is preferably 30 mol% or more and 100 mol% or less.

The "conjugated diene compound unit" may be a structural unit derived from one type of conjugated diene compound or a structural unit derived from two or more types of conjugated diene compounds.

From the viewpoint of achieving both excellent vibration damping properties and thermal stability, the conjugated diene compound preferably contains isoprene, or isoprene and butadiene. In addition, as the conjugated diene compound, a conjugated diene compound other than isoprene and butadiene may be contained as described below. On the other hand, from the viewpoint of easily exhibiting excellent vibration damping properties and thermal stability, the content of isoprene in the conjugated diene compound is preferably 20% by mass or more, more preferably 40% by mass or more, still more preferably 45% by mass or more, even more preferably 55% by mass or more, yet still more preferably 75% by mass or more, and particularly preferably 100% by mass, that is, isoprene is particularly preferably used as the conjugated diene compound. In other words, the content of isoprene in the conjugated diene compound is preferably 20% by mass or more and 100% by mass or less.

In addition, when the conjugated diene compound is a mixture of butadiene and isoprene, the mixing ratio [isoprene/butadiene] (mass ratio) thereof is not particularly limited as long as the effects of the present invention are not impaired, but is preferably 5/95 to 95/5, more preferably 10/90 to 90/10, still more preferably 40/60 to 70/30, and particularly preferably 45/55 to 65/35. When the mixing ratio [isoprene/butadiene] is expressed as a molar ratio, it is preferably 5/95 to 95/5, more preferably 10/90 to 90/10, still more preferably 40/60 to 70/30, and particularly preferably 45/55 to 55/45.

Examples of the conjugated diene compound include, in addition to isoprene and butadiene described above, β-farnesene, hexadiene, 2,3-dimethyl-1,3-butadiene, 1,3-pentadiene, and myrcene. These conjugated diene compounds may be used alone, or two or more thereof may be used.

Further, the polymer block (A-2) may contain a structural unit derived from the other polymerizable monomer other than the conjugated diene compound as long as the object and effects of the present invention are not impaired. In this case, in the polymer block (A-2), the content of the structural unit derived from the other polymerizable monomer other than the conjugated diene compound is preferably less than 70 mol%, more preferably less than 50 mol%, still more preferably less than 35 mol%, and particularly preferably less than 20 mol%. The lower limit value of the content

of the structural unit derived from the other polymerizable monomer other than the conjugated diene compound is not particularly limited, but may be 0 mol%, may be 5 mol%, or may be 10 mol%.

Preferred examples of the other polymerizable monomer include aromatic vinyl compounds such as styrene, α-methylstyrene, o-methylstyrene, m-methylstyrene, p-methylstyrene, p-t-butylstyrene, 2,4-dimethylstyrene, vinylnaphthalene, and vinylanthracene, and at least one compound selected from the group consisting of methyl methacrylate, methyl vinyl ether, N-vinylcarbazole, 6-pinene, 8,9-p-menthene, dipentene, methylene norbornene, 2-methylene tetrahydrofuran, 1,3-cyclopentadiene, 1,3-cyclohexadiene, 1,3-cycloheptadiene, 1,3-cyclooctadiene, and the like. Among these, styrene, α-methylstyrene, and p-methylstyrene are more preferable, and styrene is still more preferable.

Further, the block copolymer (A0) may have at least one polymer block (A-2). In a case where the block copolymer (A0) has two or more polymer blocks (A-2), the polymer blocks (A-2) may be the same or different from each other. When the polymer block (A-2) has two or more kinds of structural units, the bonding form thereof may be random, tapered, completely alternating, partially block-like, block, or a combination of two or more kinds thereof.

The bonding form of the conjugated diene compound is not particularly limited as long as the object and effects of the present invention are not impaired. For example, when the structural unit constituting the polymer block (A-2) is any one of an isoprene unit and a mixture unit of isoprene and butadiene, as the bonding form of each of isoprene and butadiene, a vinyl bond such as a 1,2-bond or a 1,4-bond can be taken in the case of butadiene, and a vinyl bond such as a 1,2-bond, a 3,4-bond, or a 1,4-bond can be taken in the case of isoprene. Only one of these bonding forms may be present, or two or more of these bonding forms may be present.

In the block copolymer (A0), the total content of 3,4-bond unit and 1,2-bond unit (that is, vinyl bond amount) in the polymer block (A-2) is 50 mol% or more, preferably 55 mol% or more, more preferably 60 mol% or more, still more preferably 65 mol% or more, even more preferably 70 mol% or more, and yet still more preferably 75 mol% or more. When the vinyl bond amount in the polymer block (A-2) is 50 mol% or more, good vibration damping properties are ensured, and as the vinyl bond amount increases, the vibration damping properties tend to improve.

On the other hand, the vinyl bond amount in the polymer block (A-2) is 99 mol% or less, may be 95 mol% or less, may be 92 mol% or less, and may be 90 mol% or less.

In other words, the vinyl bond amount in the polymer block (A-2) is 50 to 99 mol%, preferably 55 to 99 mol%, more preferably 60 to 99 mol%, still more preferably 65 to 99 mol%, even more preferably 70 to 99 mol%, and particularly preferably 75 to 99 mol%.

Here, the vinyl bond amount is a value calculated by $^1H$-NMR measurement according to the method described in Examples.

The polymer block (A-2) is a structural unit derived from a conjugated diene compound, and may have a structural unit containing one or more alicyclic skeletons (X) represented by the following formula (X) in the main chain.

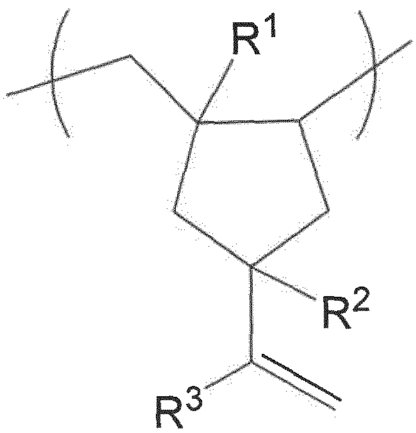

(X)

In the above formula (X), $R^1$ to $R^3$ each independently represent a hydrogen atom or a hydrocarbon group having 1 to 11 carbon atoms, and a plurality of $R^1$ to $R^3$ may be the same as or different from each other. The number of carbon atoms of the hydrocarbon group is preferably 1 to 5, more preferably 1 to 3, and still more preferably 1 (i.e., a methyl group). In addition, the hydrocarbon group may be linear or branched, and may be a saturated or unsaturated hydrocarbon group. From the viewpoint of physical properties and the formation of the alicyclic skeleton (X), it is particularly preferable that $R^1$ to $R^3$ are each independently a hydrogen atom or a methyl group.

In addition, when the block copolymer (A0) is hydrogenated, the vinyl group in the above formula (X) can be hydrogenated to form a hydrogenated product. Therefore, the meaning of the alicyclic skeleton (X) in the hydrogenated product also includes a skeleton in which the vinyl group in the above formula (X) is hydrogenated.

The polymer block (A-2) contains the alicyclic skeleton (X) in an amount of preferably 1 mol% or more, more

preferably 1.1 mol% or more, still more preferably 1.4 mol% or more, even more preferably 1.8 mol% or more, yet still more preferably 4 mol% or more, yet even more preferably 10 mol% or more, and particularly preferably 13 mol% or more. On the other hand, the upper limit of the content of the alicyclic skeleton (X) in the polymer block (A-2) is not particularly limited as long as the effects of the present invention are not impaired, but from the viewpoint of productivity, it is preferably 40 mol% or less, may be 30 mol% or less, may be 20 mol% or less, and may be 18 mol% or less.
The content of the alicyclic skeleton (X) contained in the block copolymer (A0) or the hydrogenated block copolymer (A1) is a value obtained from an integrated value derived from the alicyclic skeleton (X) in the polymer block (A-2) by $^{13}C$-NMR measurement of the block copolymer.

(Vinyl Bond Amount of Polymer Block (A-2))

When the structural unit constituting the polymer block (A-2) is any one of an isoprene unit, a butadiene unit, and a mixture unit of isoprene and butadiene, as the bonding form of each of isoprene and butadiene other than the bonding forms forming the alicyclic skeleton (X), a 1,2-bond or a 1,4-bond can be taken in the case of butadiene, and a 1,2-bond, a 3,4-bond, or a 1,4-bond can be taken in the case of isoprene.
In the block copolymer (A0) and the hydrogenated block copolymer (A1), the total content of 3,4-bond unit and 1,2-bond unit in the polymer block (A-2) (hereinafter, sometimes simply referred to as "vinyl bond amount") is 50 to 99 mol%, preferably 55 to 95 mol%, more preferably 63 to 95 mol%, and still more preferably 70 to 95 mol%.
Within the above-described range, it is possible to increase compatibility with the non-polar resin, in particular, compatibility with the polyolefin resin (B), and thus, high adhesiveness to a metal and other materials can be exhibited. Further, it becomes easy to exhibit excellent vibration damping properties.

(Weight Average Molecular Weight of Polymer Block (A-2))

The weight average molecular weight (Mw) of the polymer block (A-2) is not particularly limited, but the total weight average molecular weight of the polymer block (A-2) contained in the block copolymer (A0) before hydrogenation is preferably 15,000 to 400,000, more preferably 20,000 to 300,000, still more preferably 30,000 to 250,000, even more preferably 30,000 to 200,000, and yet still more preferably 30,000 to 150,000. When the total weight average molecular weight of the polymer block (A-2) is within the above range, more excellent vibration damping properties are easily exhibited.

(Content of Polymer Block (A-2))

The content of the polymer block (A-2) in the block copolymer (A0) is preferably 99% by mass or less, more preferably 97% by mass or less, and still more preferably 94% by mass or less. When the content of the polymer block (A-2) is 99% by mass or less, it is easy to obtain a modified hydrogenated product (A) having vibration damping properties and having mechanical properties, dynamic physical properties, and moldability suitable for various applications, or a resin composition (D1) containing the modified hydrogenated product (A). On the other hand, the content of the polymer block (A-2) in the block copolymer (A0) is preferably 30% by mass or more, more preferably 35% by mass or more, still more preferably 60% by mass or more, even more preferably 75% by mass or more, yet still more preferably 80% by mass or more, and yet even more preferably 85% by mass or more. When the content of the polymer block (A-2) is 30% by mass or more, it is possible to obtain a modified hydrogenated product (A) having more excellent vibration damping properties or a resin composition (D1) containing the modified hydrogenated product (A).

(Other Structural Units in Polymer Block (A-2))

The polymer block (A-2) may contain a structural unit derived from the other polymerizable monomer other than the conjugated diene compound as long as the object and effects of the present invention are not impaired. In this case, in the polymer block (A-2), the content of the structural unit derived from the other polymerizable monomer other than the conjugated diene compound is preferably less than 50 mol%, more preferably less than 30 mol%, still more preferably less than 20 mol%, even more preferably less than 10 mol%, and particularly preferably 0 mol%. In other words, in the polymer block (A-2), the content of the structural unit derived from the other polymerizable monomer other than the conjugated diene compound is preferably 0 mol% or more and less than 50 mol%.
Preferred examples of the other polymerizable monomer include aromatic vinyl compounds such as styrene, α-methylstyrene, o-methylstyrene, m-methylstyrene, p-methylstyrene, p-t-butylstyrene, 2,4-dimethylstyrene, N-vinylcarbazole, vinylnaphthalene, and vinylanthracene, and at least one compound selected from the group consisting of methyl methacrylate, methyl vinyl ether, β-pinene, 8,9-p-menthene, dipentene, methylene norbornene, 2-methylene tetrahydrofuran, 1,3-cyclopentadiene, 1,3-cyclohexadiene, 1,3-cycloheptadiene, 1,3-cyclooctadiene, and the like.

The block copolymer (A0) may have at least one of the polymer blocks (A-2). In a case where the block copolymer (A0) has two or more polymer blocks (A-2), the polymer blocks (A-2) may be the same or different from each other.

(Bonding Mode of Polymer Block (A-1) and Polymer Block (A-2))

In the block copolymer (A0), the bonding form is not particularly limited as long as the polymer block (A-1) and the polymer block (A-2) are bonded to each other, and may be linear, branched, radial, or a bonding mode in which two or more thereof are combined. Among them, the bonding form of the polymer block (A-1) and the polymer block (A-2) is preferably linear, and examples thereof include, when the polymer block (A-1) is represented by A and the polymer block (A-2) is represented by B, a diblock copolymer represented by A-B, a triblock copolymer represented by A-B-A or B-A-B, a tetrablock copolymer represented by A-B-A-B, a pentablock copolymer represented by A-B-A-B-A or B-A-B-A-B, and a (A-B)nZ type copolymer (Z represents a coupling agent residue, and n represents an integer of 3 or more). Among them, a linear triblock copolymer or a diblock copolymer is preferable, and an A-B-A type triblock copolymer is preferably used from the viewpoint of flexibility, ease of production, and the like.

Specific examples of the A-B-A type triblock copolymer include a styrene-hydrogenated butadiene/isoprene-styrene copolymer. That is, it is preferable that at least a styrene-hydrogenated butadiene/isoprene-styrene copolymer is contained as the block copolymer.

Here, in the description herein, when the same type of polymer block is linearly bonded via a bifunctional coupling agent or the like, the bonded polymer block as a whole is treated as one polymer block. Accordingly, the polymer block to be originally strictly expressed as Y-Z-Y (Z represents a coupling residue) is expressed as Y as a whole, except where it is necessary to distinguish it from the polymer block Y alone. In the description herein, since polymer blocks of this type containing a coupling agent residue are treated as described above, for example, a block copolymer containing a coupling agent residue and to be strictly expressed as A-B-Z-B-A (Z represents a coupling agent residue) is expressed as A-B-A and treated as an example of a triblock copolymer.

(Contents of Polymer Blocks (A-1) and (A-2)

The block copolymer (A0) may contain a polymer block other than the polymer blocks (A-1) and (A-2) as long as the object and effects of the present invention are not impaired, but the total content of the polymer block (A-1) and the polymer block (A-2) is preferably 90% by mass or more, more preferably 95% by mass or more, and particularly preferably substantially 100% by mass. When the content is 90% by mass or more, it becomes easy to obtain a resin composition that is likely to exhibit more excellent vibration damping properties. In other words, the total content of the polymer block (A-1) and the polymer block (A-2) in the block copolymer (A0) is preferably 90 to 100% by mass.

(Weight Average Molecular Weight of Block Copolymer (A0) and Hydrogenated Block Copolymer (A1))

The weight average molecular weight (Mw) of the block copolymer (A0) and the hydrogenated block copolymer (A1) obtained by gel permeation chromatography in terms of standard polystyrene is preferably 50,000 to 400,000, more preferably 60,000 to 300,000, still more preferably 70,000 to 250,000, even more preferably 80,000 to 200,000, and particularly preferably 90,000 to 180,000. When the weight average molecular weight of the block copolymer (A0) or the hydrogenated block copolymer (A1) is 50,000 or more, the heat resistance becomes high, and when the weight average molecular weight is 400,000 or less, the handling property of the obtained resin composition becomes good.

(Hydrogenation Rate)

In the modified hydrogenated product (A) or the hydrogenated block copolymer (A1) which is an unmodified hydrogenated block copolymer, the hydrogenation rate of the polymer block (A-2) is more than 0 mol%. That is, at least a part of the carbon-carbon double bonds of the polymer block (A-2) is hydrogenated.

The hydrogenation rate is preferably 50 mol% or more from the viewpoint of securing vibration damping properties and thermal stability in a wide temperature range. In addition, from the viewpoint of flexibility and dynamic physical properties of the resin composition (D1) containing the modified hydrogenated product (A), the above-described hydrogenation rate is more preferably 60 mol% or more, still more preferably 70 mol% or more, even more preferably 80 mol% or more, and particularly preferably 90 mol% or more. The upper limit of the hydrogenation rate is not particularly limited, but the upper limit value may be 99 mol% or may be 98.5 mol%. In other words, the hydrogenation rate is preferably 50 to 99 mol%.

The hydrogenation rate is a value obtained by measuring the content of carbon-carbon double bonds in the conjugated diene compound-derived structural unit in the polymer block (A-2) by $^1$H-NMR measurement after hydrogenation, and more specifically, is a value measured according to the method described in Examples.

(Functional Group)

The modified hydrogenated product (A) can be produced, for example, by reacting a compound having one or two or more functional group selected from an alkoxysilyl group, a carboxy group, an amino group, a hydroxy group, an epoxy group, and a group derived from an acid anhydride with a hydrogenated block copolymer (A1) obtained by hydrogenating the above-described block copolymer (A0) to introduce the functional group into the hydrogenated block copolymer (A1) and modifying the hydrogenated block copolymer (A1). The functional group is preferably one or two or more functional group selected from an alkoxysilyl group and a group derived from an acid anhydride. The method for producing the modified hydrogenated product (A) will be described later.
By introducing the functional group into the hydrogenated block copolymer (A1), high adhesiveness to a metal and other materials can be brought about in the resin composition (D1) containing the modified hydrogenated product (A). It is preferable that the modified hydrogenated product (A) has the functional group in the side chain, whereby a difference in molecular mobility between the main chain and the side chain becomes large, and the glass transition temperature is controlled, whereby excellent vibration damping properties can be exhibited over a wide temperature range.
The content of the functional group in the modified hydrogenated product (A) is preferably 0.1 phr or more, more preferably 0.15 phr or more, still more preferably 0.2 phr or more, and even more preferably 0.25 phr or more. On the other hand, the content of the functional group in the modified hydrogenated product (A) is preferably 5.0 phr or less, more preferably 4.0 phr or less, still more preferably 3.0 phr or less, even more preferably 2.0 phr or less, and yet still more preferably 0.95 phr or less. In other words, the content of the functional group in the modified hydrogenated product (A) is preferably 0.1 to 5.0 phr.
Further, the content of the functional group in the modified hydrogenated product (A) is preferably 0.1 mol% or more, more preferably 0.15 mol% or more, still more preferably 0.2 mol% or more, and even more preferably 0.25 mol% or more. On the other hand, the content of the functional group in the modified hydrogenated product (A) is preferably 5.0 mol% or less, more preferably 4.0 mol% or less, still more preferably 3.0 mol% or less, even more preferably 2.0 mol% or more, and yet still more preferably 0.95 mol% or less. In other words, the content of the functional group in the modified hydrogenated product (A) is preferably 0.1 to 5.0 mol%.
When the content of the functional group in the modified hydrogenated product (A) is within the above range, the adhesiveness of the resin composition (D1) containing the modified hydrogenated product (A) can be made excellent. In addition, the content (phr) of the functional group means the part by mass of the functional group with respect to 100 parts by mass of the modified hydrogenated product (A), and the content of the functional group in the modified hydrogenated product (A) can be calculated by titration, $^1$H-NMR measurement, or measurement based on infrared spectral analysis (IR measurement).
The amount of modification in the modified hydrogenated product (A) can be adjusted by adjusting the use ratio, type, and the like of the modifying agent to be used.

(Characteristics of Modified Hydrogenated Product (A))

The weight average molecular weight of the modified hydrogenated product (A) is preferably 50,000 to 400,000, more preferably 60,000 to 300,000, still more preferably 70,000 to 250,000, particularly preferably 80,000 to 200,000, and most preferably 90,000 to 180,000.
The weight average molecular weight of the modified hydrogenated product (A) can be adjusted, for example, by the amount of a polymerization initiator used at the time of polymerization.
From the viewpoint of improving the vibration damping properties, the glass transition temperature of the modified hydrogenated product (A) is preferably -30 to +30°C, more preferably -15 to +30°C, and still more preferably -10 to +25°C.
In the description herein, the glass transition temperature is a value measured using a differential scanning calorimeter (DSC) measurement apparatus, and is specifically measured by the method described in Examples.
The glass transition temperature of the modified hydrogenated product (A) can be adjusted by, for example, the content of 3,4-bond and 1,2-bond of the conjugated diene.
The melt flow rate of the modified hydrogenated product (A) measured according to JIS K 7210 (2014) under the conditions of a temperature of 230°C and a load of 21 N is preferably 1 to 30 g/10 min, more preferably 3 to 25 g/10 min, and still more preferably 5 to 20 g/10 min from the viewpoint of moldability.
Tan δ (loss tangent) of the modified hydrogenated product (A) is a ratio of the loss elastic modulus to the storage elastic modulus at a frequency of 1 Hz in the dynamic viscoelasticity measurement, and the peak top temperature and intensity of tan δ greatly contribute to vibration damping properties and other physical properties. Here, the peak top intensity of tan δ is a value of tan δ when the peak of tan δ becomes maximum. Further, the peak top temperature of tan δ is a temperature at which the peak of tan δ becomes maximum.

In the description herein, the peak top temperature and intensity of tan δ of the block copolymer (A0) or the hydrogenated block copolymer (A1) are measured by pressing the block copolymer (A0) or the hydrogenated block copolymer (A1) at a temperature of 230°C and a pressure of 10 MPa for 3 minutes to prepare a single layer sheet having a thickness of 1.0 mm, cutting the single layer sheet into a disc shape, and measuring the disc-shaped sheet as a test piece. The measurement conditions are, in accordance with JIS K 7244-10 (2005), a strain amount of 0.1%, a frequency of 1 Hz, a measurement temperature of -70 to +100°C, and a temperature raising rate of 3°C/min.

More specifically, the peak top temperature of tan δ and the peak top intensity of tan δ of the block copolymer (A0) or the hydrogenated block copolymer (A1) are values measured according to the method described in Examples.

The modified hydrogenated product (A) may have a peak top intensity of tan δ of 1.0 or more by the above-described measurement, and may have a higher peak top intensity of 1.5 or more, and further may have a peak top intensity of 1.9 or more. A higher peak top intensity of tan δ indicates better physical properties such as vibration damping properties at that temperature, and if the peak top intensity is 1.0 or more, sufficient vibration damping properties can be obtained in an actual use environment.

Further, the modified hydrogenated product (A) has a peak top temperature of tan δ of preferably -50°C or higher, more preferably -40°C or higher, still more preferably -30°C or higher, even more preferably -25°C or higher, and may be 0°C or higher. On the other hand, the upper limit of the peak top temperature of tan δ may be +50°C or lower, may be +40°C or lower, and may be +35°C or lower, as long as the effects of the present invention are not impaired. The range of the peak top temperature of tan δ is, for example, preferably from -50 to +50°C, more preferably from -40 to +40°C, still more preferably from -30 to +30°C, and even more preferably from -25 to +25°C. When the peak top temperature of the tan δ is -50°C or higher or +50°C or lower, sufficient vibration damping properties can be obtained under an actual use environment.

<Method for Producing Modified Hydrogenated Product (A)>

The modified hydrogenated product (A) can be produced by using at least an aromatic vinyl compound and a conjugated diene compound as monomers, polymerizing them to form a block copolymer (A0), and subjecting the block copolymer (A0) to a modification reaction using a modifying agent before or after hydrogenation.

(Preparation of Block Copolymer (A0)

The block copolymer (A0) can be obtained as a block copolymer having a polymer block (A-1) containing a structural unit derived from an aromatic vinyl compound and a polymer block (A-2) containing a structural unit derived from a conjugated diene compound by performing a polymerization reaction using at least the aromatic vinyl compound and the conjugated diene compound as monomers.

The aromatic vinyl compound, the conjugated diene compound, the polymer block (A-1), and the polymer block (A-2) are the same as those described above in the description of the modified hydrogenated product (A).

The polymerization reaction can be carried out by, for example, a solution polymerization method, an emulsion polymerization method, or a solid phase polymerization method. Among these, a solution polymerization method is preferable, and for example, a known method such as an ionic polymerization method such as anionic polymerization or cationic polymerization, or a radical polymerization method can be applied. Among these, an anionic polymerization method is preferable. In the anionic polymerization method, an aromatic vinyl compound and a conjugated diene compound are sequentially added in the presence of a solvent, an anionic polymerization initiator, and as necessary, a Lewis base to obtain a block copolymer, and a coupling agent may be added as necessary to perform a reaction.

Examples of an organolithium compound which can be used as a polymerization initiator for anionic polymerization in the above-described method include methyllithium, ethyllithium, n-butyllithium, sec-butyllithium, tert-butyllithium, and pentyllithium. Further, examples of a dilithium compound which can be used as a polymerization initiator include naphthalenedilithium, and dilithiohexylbenzene.

Examples of the coupling agent include dichloromethane, dibromomethane, dichloroethane, dibromoethane, dibromobenzene, and phenyl benzoate.

The amounts of these polymerization initiators and coupling agents used are appropriately determined depending on the desired weight average molecular weight of the block copolymer (A0) or the hydrogenated block copolymer (A1). In general, the initiator such as an alkyllithium compound or a dilithium compound is preferably used in a proportion of 0.01 to 0.2 parts by mass per 100 parts by mass of the total of the monomer of the polymer block (A-1) and the monomer such as a conjugated diene compound used for polymerization, and when the coupling agent is used, it is preferably used in a proportion of 0.001 to 0.8 parts by mass per 100 parts by mass of the total of the monomers.

The solvent is not particularly limited as long as it does not adversely affect the anionic polymerization reaction, and examples thereof include aliphatic hydrocarbons such as cyclohexane, methylcyclohexane, n-hexane, and n-pentane; and aromatic hydrocarbons such as benzene, toluene, and xylene. Further, the polymerization reaction is usually

carried out at a temperature of 0 to 100°C, preferably 10 to 70°C, for 0.5 to 50 hours, preferably 1 to 30 hours.

In addition, the content of the alicyclic skeleton (X) and the contents of the 3,4-bond and the 1,2-bond in the polymer block (A-2) can be increased by a method of adding a Lewis base as a co-catalyst during the polymerization of the conjugated diene compound.

Examples of the Lewis base that can be used include ethers such as dimethyl ether, diethyl ether, tetrahydrofuran, and 2,2-di(2-tetrahydrofuryl)propane (DTHFP); glycol ethers such as ethylene glycol dimethyl ether, diethylene glycol dimethyl ether, triethylene glycol dimethyl ether, and tetraethylene glycol dimethyl ether; amines such as triethylamine, N,N,N',N'-tetramethylenediamine, N,N,N',N'-tetramethylethylenediamine (TMEDA), and N-methylmorpholine; and metal salts such as sodium or potassium salts of aliphatic alcohols such as sodium t'butylate, sodium t-amylate, and sodium isopentylate, or sodium or potassium salts of alicyclic alcohols such as dialkylsodium cyclohexanolate, for example, sodium mentholate.

Among the Lewis bases, tetrahydrofuran and DTHFP are preferably used from the viewpoint of vibration damping properties and thermal stability. In addition, DTHFP is more preferably used because a high amount of vinyl bonds can be obtained, a high hydrogenation rate can be easily achieved without using an excessive amount of hydrogenation catalyst, and more excellent vibration damping properties and thermal stability can be simultaneously achieved.

These Lewis bases may be used alone or in combination of two or more thereof.

When the polymer block (A-2) contains a structural unit derived from isoprene and/or butadiene, the amount of the Lewis base to be added is determined by controlling the amount of vinyl bonds of the isoprene units and/or butadiene units constituting the polymer block (A-2). Therefore, the amount of the Lewis base to be added is not limited in a strict sense, but is preferably in the range of usually 0.1 to 1,000 moles, and preferably 1 to 100 moles, per gram atom of lithium contained in the alkyllithium compound or the dilithium compound used as the polymerization initiator.

After the polymerization is carried out by the method described above, an active hydrogen compound such as an alcohol, a carboxylic acid or water is added to terminate the polymerization reaction, whereby a block copolymer can be obtained.

(Hydrogenation Reaction)

The hydrogenated block copolymer (A1) can be produced by hydrogenating (hydrogenation reaction) the block copolymer (A0) obtained by the above-described production method in an inert organic solvent under the presence of a hydrogenation catalyst. By the above-described hydrogenation reaction, the carbon-carbon double bonds derived from the conjugated diene compound in the polymer block (A-2) in the block copolymer (A0) are hydrogenated, and a hydrogenated product of the block copolymer (A0), that is, the hydrogenated block copolymer (A1) can be produced.

The block copolymer (AO) may be hydrogenated after being modified by the method described below.

The hydrogenation reaction can be carried out at a hydrogen pressure of about 0.1 to 20 MPa, preferably 0.5 to 15 MPa, and more preferably 0.5 to 5 MPa, a reaction temperature of about 20 to 250°C, preferably 50 to 180°C, and more preferably 70 to 180°C, and a reaction time of usually about 0.1 to 100 hours, and preferably 1 to 50 hours.

Examples of the hydrogenation catalyst include Raney nickel; heterogeneous catalysts in which a metal such as Pt, Pd, Ru, Rh, or Ni is supported on a carrier such as carbon, alumina, or diatomaceous earth; Ziegler catalysts composed of a combination of a transition metal compound and an alkylaluminum compound, an alkyllithium compound, or the like; and metallocene catalysts.

The hydrogenated block copolymer (A1) (or the modified hydrogenated product (A)) thus obtained can be obtained by pouring the polymerization reaction liquid into methanol or the like, stirring and then filtering, followed by heating or drying under reduced pressure, or by pouring the polymerization reaction liquid into hot water together with steam, subjecting to so-called steam-stripping in which the solvent is removed by azeotropic distillation, and then heating or drying under reduced pressure.

The degree of the hydrogenation rate of the carbon-carbon double bond in the polymer block (A-2) when used as a hydrogenated product can be specified according to the performance desired in various applications of the resin composition (D1) and the resin composition (D2) described later.

As the hydrogenation rate of the hydrogenated product is higher, it is possible to use a hydrogenated product having improved heat resistance and weather resistance, and in the modified hydrogenated product (A) used in the resin composition (D1), as described above, the hydrogenation rate of the polymer block (A-2) is preferably 50 to 99 mol%.

(Modification Reaction)

The modified hydrogenated product (A) can be produced by introducing the above-mentioned functional group after hydrogenating the block copolymer (A0) or by introducing the above-mentioned functional group before hydrogenating the block copolymer (A0) and then hydrogenating the block copolymer (AO). In the case of modification by a radical reaction, it is preferable to hydrogenate the block copolymer (A0) to obtain the hydrogenated block copolymer (A1), and

then introduce a specific functional group to produce the modified hydrogenated product (A), from the viewpoint of control of the reaction.

In addition, the reaction of introducing the above-mentioned functional group into the hydrogenated block copolymer (A1) to modify the hydrogenated block copolymer (A1) (hereinafter, sometimes referred to as a "modification reaction") can be carried out by a known method.

The modification reaction can be carried out, for example, by dissolving the hydrogenated block copolymer (A1) in an organic solvent, adding various modifying agents capable of adding the above-mentioned functional group thereto, and reacting the resultant mixture at about 50 to 300°C for about 0.5 to 10 hours.

Further, the modification reaction can also be carried out, for example, by bringing the hydrogenated block copolymer (A1) into a molten state using an extruder or the like without using a solvent, and adding various modifying agents thereto. In this case, the temperature of the modification reaction is usually from the melting temperature of the hydrogenated block copolymer (A1) or higher to 400°C or lower, preferably 90 to 350°C, more preferably 100 to 300°C, and the reaction time is usually about 0.5 to 10 minutes.

In addition, it is preferable to add a radical initiator when the modification reaction is performed in a molten state, and an aging inhibitor may be added from the viewpoint of suppressing a side reaction or the like.

In the method for producing the modified hydrogenated product (A), the modification reaction is preferably carried out by the latter method of modifying in a molten state, from the viewpoint that workability, vibration damping properties, and thermal stability are likely to be excellent.

In other words, a preferred aspect of the method for producing the modified hydrogenated product (A) further includes a step of hydrogenating the block copolymer (AO) to obtain the hydrogenated block copolymer (A1), and then introducing one or two or more functional group selected from an alkoxysilyl group, a carboxy group, an amino group, a hydroxy group, an epoxy group, and a group derived from an acid anhydride into the hydrogenated block copolymer (Al) in a molten state using a radical initiator.

Examples of the modifying agent to which the functional group can be added include dimethyldiethoxysilane, tetramethoxysilane, tetraethoxysilane, 3-aminopropyltriethoxysilane, vinyltrimethoxysilane, vinyltriethoxysilane, hydroxymethyltriethoxysilane, vinylbenzyldiethylamine, vinylbenzyldimethylamine, 1-glycidyl-4-(2-pyridyl)piperazine, 1-glycidyl-4-phenylpiperazine, 1-glycidyl-4-methylpiperazine, 1-glycidyl-4-methylhomopiperazine, 1-glycidyl hexamethyleneimine, and tetraglycidyl-1,3-bisaminomethylcyclohexane. As the modifying agent, unsaturated carboxylic acid anhydrides such as maleic anhydride, citraconic acid anhydride, 2,3-dimethylmaleic acid anhydride, and itaconic acid anhydride can also be used. Further, a modifying agent to which the above functional group can be added may be adopted from the modifying agents described in JP 2011-132298 A. The above modifying agents may be used alone or in combination of two or more thereof.

The amount of the modifying agent to be added may be appropriately determined so as to have a desired content of the functional group according to the content of the functional group in the modified hydrogenated product (A) described above, but the amount of the modifying agent is usually about 0.01 to 10 parts by mass, preferably 0.01 to 5 parts by mass, more preferably 0.01 to 3 parts by mass, and still more preferably 0.05 to 2 parts by mass with respect to 100 parts by mass of the hydrogenated block copolymer (A1) or the block copolymer (A0).

As the radical initiator, organic peroxides or organic peresters such as dialkyl peroxides, diacyl peroxides, peroxy esters, peroxy ketals, and hydroperoxides are used, and azo compounds such as azobisisobutyronitrile and dimethylazoisobutyrate can also be used. Among the above radical initiators, organic peroxides are preferable, and dialkyl peroxides are more preferable.

The amount of the radical initiator to be added may be appropriately determined depending on the combination of the hydrogenated block copolymer (A1) or the block copolymer (AO) and the modifying agent, but the amount of the radical initiator is usually about 0.01 to 10 parts by mass, preferably 0.01 to 5 parts by mass, more preferably 0.01 to 3 parts by mass, and still more preferably 0.05 to 2 parts by mass with respect to 100 parts by mass of the hydrogenated block copolymer (A1) or the block copolymer (A0).

<Polyolefin Resin (B)>

Examples of the polyolefin resin (B) contained in the resin composition (D1) include polypropylene, polyethylene, polymethylpentene, an ethylene-vinyl acetate copolymer, and a resin obtained by combining a plurality of types of these resins.

Examples of the polypropylene include homopolypropylene, block polypropylene which is a block copolymer with an α-olefin such as ethylene, and random polypropylene which is a random copolymer with an α-olefin such as ethylene.

Examples of the polyethylene include high-density polyethylene, medium-density polyethylene, low-density polyethylene, and linear low-density polyethylene.

Examples of the polymethylpentene include a homopolymer of 4-methyl-1-pentene, and a copolymer having

a structural unit derived from 4-methyl-1-pentene and a structural unit derived from an α-olefin having 2 to 20 carbon atoms (excluding 4-methyl-1-pentene).

The ethylene-vinyl acetate copolymer is not particularly limited as long as it is a resin obtained by copolymerizing ethylene with acetic acid as a comonomer, and those having various vinyl acetate group contents (VA contents) can be used.

In addition, a homopolymer or a copolymer of α-olefin, a copolymer of propylene and/or ethylene with α-olefin, and the like can also be used as the polyolefin resin (B).

Examples of the α-olefin include α-olefins having 20 or less carbon atoms, such as 1-butene, 1-pentene, 3-methyl-1-butene, 1-hexene, 3-methyl-1-pentene, 4-methyl-1-pentene, 1-heptene, 1-octene, 1-nonene, 1-decene, 1-dodecene, 1-tetradecene, 1-hexadecene, 1-octadecene, and 1-eicosene, and one or two or more of these α-olefins can be used.

In one aspect, the polyolefin resin (B) is at least one resin selected from the group consisting of polypropylene, polyethylene, polymethylpentene, an ethylene-vinyl acetate copolymer, and a homopolymer or copolymer of an α-olefin, and a copolymer of propylene and/or ethylene and an α-olefin.

<Additives>

The resin composition (D1) may contain various additives to the extent that the effects of the present invention are not impaired.

Examples of the additives include inorganic fillers such as talc, clay, mica, calcium silicate, glass, hollow glass spheres, glass fiber, calcium carbonate, magnesium carbonate, basic magnesium carbonate, aluminum hydroxide, magnesium hydroxide, calcium hydroxide, zinc borate, dawsonite, ammonium polyphosphate, calcium aluminate, hydrotalcite, silica, diatomaceous earth, alumina, titanium oxide, iron oxide, zinc oxide, magnesium oxide, tin oxide, antimony oxide, barium ferrite, strontium ferrite, carbon black, graphite, carbon fiber, activated carbon, hollow carbon spheres, calcium titanate, lead zirconate titanate, and silicon carbide; organic fillers such as wood flour and starch, cellulose fiber, cellulose nanofiber, carbon fiber, and carbon nanofiber. Examples of the above-described additives further include a tackifier resin, a plasticizer, a filler, a crosslinking agent (an isocyanate-based crosslinking agent, an epoxy-based crosslinking agent, a metal chelating crosslinking agent, an aziridine-based crosslinking agent, an amine resin, and the like), a heat stabilizer, a light stabilizer, an ultraviolet absorber, an infrared absorber, an antioxidant, a lubricant, a colorant, an antistatic agent, a flame retardant, a water-repellent agent, a waterproof agent, a hydrophilicity imparting agent, a conductivity imparting agent, a thermal conductivity imparting agent, an electromagnetic wave shielding property imparting agent, a light-transmitting property adjusting agent, a fluorescent agent, a sliding property imparting agent, a transparency imparting agent, an anti-blocking agent, a metal inactivating agent, an antibacterial agent, a crystal nucleating agent, an anti-crack agent, an ozone deterioration inhibitor, a rat-repellent agent, a dispersant, a viscosity improver, a light resistant agent, a weather resistant agent, a copper inhibitor, a reinforcing agent, an antifungal agent, and a macrocyclic molecule (cyclodextrin, calixarene, cucurbituril, and the like).

The additives may be used alone or in combination of two or more thereof.

The content of the additive in the resin composition (D1) is not limited, and can be appropriately adjusted according to the type of the additive, the application of the resin composition (D1), and the like. When the resin composition (D1) contains the additive, the content of the additive may be, for example, 50% by mass or less, 45% by mass or less, 30% by mass or less, 20% by mass or less, and 10% by mass or less, or may be 0.01% by mass or more, 0.1% by mass or more, 1% by mass or more, and 5% by mass or more, with respect to the total mass of the resin composition (D1). In other words, the content of the additive in the resin composition (D1) is preferably 0.01 to 50% by mass.

<Proportion of Each Component in Resin Composition (D1)>

In the first resin composition (D1), when the mass of the modified hydrogenated product (A) is Aa and the mass of the polyolefin resin (B) is Ba, from the viewpoint of adhesiveness, Aa/Ba is preferably 95/5 to 5/95, more preferably 80/20 to 10190, and still more preferably 70/30 to 10/90.

Further, from the viewpoint of sufficiently exhibiting adhesiveness and the like, the total mass of the modified hydrogenated product (A) and the polyolefin resin (B) contained in the first resin composition (D1) is preferably 50% by mass or more, more preferably 65% by mass or more, still more preferably 70% by mass or more, even more preferably 80% by mass or more, and particularly preferably 90% by mass or more. The upper limit of the total mass is not particularly limited, and may be 100% by mass, may be 99,9% by mass, or may be 99.5% by mass. In other words, the total mass of the modified hydrogenated product (A) and the polyolefin resin (B) contained in the first resin composition (D1) is preferably 50 to 100% by mass.

<Characteristics of Resin Composition (D1)>

(Adhesive Strength to Metal)

The adhesive strength of the resin composition (D1) to the aluminum alloy plate (A5052P) is preferably 2.5 $N/mm^2$ or more, more preferably 3.0 $N/mm^2$ or more, still more preferably 3.5 $N/mm^2$ or more, and even more preferably 4.0 $N/mm^2$ or more, from the viewpoint of ensuring high adhesiveness.
Further, the adhesive strength of the resin composition (D 1) to the stainless steel plate (SUS304) is preferably 3.5 $N/mm^2$ or more, more preferably 4.0 $N/mm^2$ or more, still more preferably 4.5 $N/mm^2$ or more, even more preferably 5.0 $N/mm^2$ or more, and particularly preferably 5.5 $N/mm^2$ or more, from the viewpoint of ensuring high adhesiveness.
In any case, the upper limit of the adhesive strength is not limited, but may be 30 $N/mm^2$ as a standard of the measurable adhesive strength.
In addition, the adhesive strength of the resin composition (D1) when the metal plate is used as the adherend is measured by placing a test piece having a length of 34 mm × a width of 10 mm × a thickness of 0.05 cm between a pair of metal plates, pressurizing and heating the test piece, and pulling the end portions on the non-bonded side of the two adherends in the opposite directions to each other under the condition of a tensile speed of 5 mm/min using an shearing peeling test apparatus Instron 3345 (manufactured by Instron) to peel off the shearing. Specifically, it is measured by the method described in Examples.

(Melt Flow Rate (MFR))

The MFR of the resin composition (D 1) is preferably 5 to 30 g/10 min, more preferably 10 to 25 g/10 min, and still more preferably 15 to 25 g/10 min, from the viewpoint of ensuring fluidity when preparing the resin composition (D1).
The MFR is measured by using a melt indexer (MELT INDEXER L241, manufactured by Tateyama Kagaku High-Technologies Co., Ltd.) under the conditions of a temperature of 230°C and a load of 21 N in accordance with JIS K 7210 (2014).

(Tensile Elastic Modulus)

The tensile elastic modulus of the resin composition (D1) is preferably 10 to 400 MPa, more preferably 20 to 350 MPa, and still more preferably 25 to 300 MPa, from the viewpoint of compatibility between flexibility and mechanical strength. The upper limit and the lower limit of the tensile elastic modulus are not particularly limited, and can be appropriately specified according to the application.
The tensile elastic modulus can be measured in accordance with JIS K 6251 (2017) using dumbbell No. 3 as a test piece under the condition of a tensile speed of 500 mm/min.

(Breaking Stress)

The breaking stress of the resin composition (D1) is preferably 10 to 35 MPa, more preferably 15 to 30 MPa, and still more preferably 20 to 30 MPa, from the viewpoint of mechanical strength. The upper limit of the breaking stress is not particularly limited, and can be appropriately specified according to the application.
The breaking stress can be measured in accordance with JIS K 6251 (2017) using dumbbell No. 3 as a test piece under the condition of a tensile speed of 500 mm/min.

(Breaking Elongation)

In addition, from the viewpoint of mechanical strength, the resin composition (D1) has a breaking elongation of preferably 200% or more, more preferably 300% or more, and still more preferably 600% or more, as measured under the condition of a tensile speed of 500 mm/min using a dumbbell No. 3 as a test piece, in accordance with JIS K 6251 (2017).

(Hardness)

From the viewpoint of flexibility, the resin composition (D1) has a type D durometer hardness of preferably 20 to 70, more preferably 25 to 65, and still more preferably 30 to 60 at an atmospheric temperature of 23°C, as measured in accordance with JIS K 6253-3 (2012).

<Method for Producing Resin Composition (D1)>

The resin composition (D1) can be produced by mixing the modified hydrogenated product (A), the polyolefin resin (B), and various additives as necessary using a mixer such as a Henschel mixer, a V blender, a ribbon blender, a tumbler blender, or a conical blender, or by subsequently melt-kneading the mixture at about 80 to 350°C using a kneader such as a single screw extruder, a twin screw extruder, a kneader, a Banbury mixer, or a roll.

In addition, the resin composition can also be prepared by dissolving and mixing the respective components in a solvent in which at least the modified hydrogenated product (A) and the polyolefin resin (B) are soluble, and removing the solvent.

The resin composition may be in any form such as a bale, a crumb, and a pellet. In addition, the resin composition may be formed into various molded articles by a melt kneading molding machine, or by an injection molding method, an injection compression molding method, an extrusion molding method, a blow molding method, a press molding method, a vacuum molding method, a foam molding method, and the like using a bale, a crumb, a pellet, or the like of the resin composition as a raw material.

<Applications of Resin Composition (D 1)>

The resin composition (D1) has adhesiveness to various materials, and particularly has high adhesiveness to a metal, and thus can be suitably used as a sealant for bonding portions between glass and aluminum sashes or metallic openings in windows of automobiles and buildings, connecting portions between glass and metallic frames in solar battery modules, and the like. Further, it is useful in a wide range of applications as a molded body or a structure bonded to glass, such as a window molding or a gasket of an automobile or a building, a sealing material for glass, an antiseptic and corrosive material, and the like. Further, it can be used as an adhesive agent or a coating agent for a separator of a secondary battery used in various information terminal devices such as a notebook personal computer, a mobile phone, and a video camera, a hybrid vehicle, a fuel cell vehicle, and the like.

[Adhesive Agent]

The adhesive agent according to the embodiment of the present invention includes the resin composition (D1).

By including the resin composition (D1), the adhesive agent expresses adhesiveness to various materials such as metal, glass, and resin, and can bond, for example, metal and resin, glass and resin, metal and glass, polar resin and non-polar resin, non-polar resin and non-polar resin, polar resin and polar resin, and the like. The adhesive agent has high adhesiveness, particularly to a metal.

The metal to be bonded with the adhesive agent is not particularly limited, and examples thereof include aluminum, aluminum alloys, stainless steel, copper, and magnesium alloys. In particular, since the adhesive agent exhibits high adhesiveness to aluminum, aluminum alloys, and stainless steel, the adhesive agent is preferably applied to these metals.

The adhesive agent may be entirely the resin composition (D1), or may contain the resin composition (D1) and other additives.

Examples of the additive that can be contained in the adhesive agent include the same additives as those described above.

The total amount of the modified hydrogenated product (A) and the polyolefin resin (B) contained in the adhesive agent is preferably 70% by mass or more, more preferably 80% by mass or more, and still more preferably 90% by mass or more, from the viewpoint of securing adhesiveness to an adherend. In other words, the total amount of the modified hydrogenated product (A) and the polyolefin resin (B) contained in the adhesive agent is preferably 70 to 100% by mass.

Characteristics such as adhesive strength, hardness, tensile elastic modulus, breaking stress, breaking elongation, and the like of the adhesive agent to the adherend are the same as those described for the resin composition (D1).

In a case where the adhesive agent is bonded to a metal, the adhesive agent can be disposed on the metal to be bonded and heated, or the heated and melted adhesive agent can be supplied on the metal to be bonded.

Further, in a case where the metal is bonded to the other metal by using the adhesive agent, the adhesive agent can be disposed on one metal to be bonded and the other metal is stacked thereon and heated and pressurized, or the heated and melted adhesive agent can be supplied on one metal to be bonded and the other metal is stacked thereon and pressurized.

[Compatibilizer]

The compatibilizer according to an embodiment of the present invention is a compatibilizer for compatibilizing a polar resin and a non-polar resin, the compatibilizer containing a modified hydrogenated product (A) of a block copolymer

containing a polymer block (A-1) having a structural unit derived from an aromatic vinyl compound and a polymer block (A-2) having a structural unit derived from a conjugated diene compound, in which the modified hydrogenated product (A) has one or two or more functional group selected from an alkoxysilyl group, a carboxy group, an amino group, a hydroxy group, an epoxy group, and a group derived from an acid anhydride, and the polymer block (A-2) has a vinyl bond amount of 50 to 99 mol%.

The compatibilizer may be composed of the modified hydrogenated product (A) alone, or may contain a component other than the modified hydrogenated product (A).

Examples of such a component include a processing aid, a reinforcing agent, a filler, a plasticizer, a continuous ventilation foam agent, a heat stabilizer, a light stabilizer, an ultraviolet absorber, an antioxidant, a lubricant, an antistatic agent, an antibacterial agent, an antifungal agent, a dispersant, a colorant, a foaming agent, a foaming aid, a flame retardant, a water repellent, a waterproof agent, a conductivity imparting agent, a thermal conductivity imparting agent, an electromagnetic wave shielding property imparting agent, a fluorescent agent, a crystal nucleating agent, and the like.

From the viewpoint of easily ensuring sufficient compatibility, the content of the modified hydrogenated product (A) in the compatibilizer is preferably 80% by mass or more, more preferably 90% by mass or more, and still more preferably 95% by mass or more with respect to the total mass of the compatibilizer. The upper limit is not particularly limited and may be 100% by mass, but from the viewpoint of easily ensuring good productivity, the upper limit can be, for example, 99.8% by mass or less. In other words, the content of the modified hydrogenated product (A) in the compatibilizer is preferably 80 to 100% by mass.

The polar resin to be compatibilized with the compatibilizer is the same as the polar resin (C) described later. In addition, the non-polar resin to be compatibilized with the compatibilizer is, for example, a resin exemplified as the polyolefin resin (B) described above, and in addition thereto, a styrene-based resin and the like are exemplified.

The compatibilizer may be mixed with the polar resin (C) and the polyolefin resin (B), may be mixed with the polar resin (C) and then the polyolefin resin (B) may be added, or may be mixed with the polyolefin resin (B) and then the polar resin (C) may be added.

[Second Resin Composition (D2)]

The second resin composition (D2) according to the embodiment of the present invention contains the first resin composition (D1) and the polar resin (C). Hereinafter, the second resin composition (D2) may be referred to as a "resin composition (D2)".

The modified hydrogenated product (A) contained in the first resin composition (D1) has a polymer block (A-2) into which a specific functional group is introduced by modification and having a high vinyl bond amount. Therefore, when the resin composition (D1) and the polar resin (C) are melt-kneaded, for example, the modified hydrogenated product (A) promotes the compatibility between the polyolefin resin (B) and the polar resin (C), and a second resin composition (D2) in which one of the polyolefin resin (B) and the polar resin (C) is well dispersed in the other of the polyolefin resin (B) and the polar resin (C) is obtained. Accordingly, the resin composition (D2) is more excellent in processability and moldability than the polyolefin resin (B) alone. In addition, the amount of the modified hydrogenated product (A) can be reduced.

Further, since one of the polar resin (C) and the polyolefin resin (B) is easily dispersed in the other of the polar resin (C) and the polyolefin resin (B), the resin composition (D2) or a molded article thereof has a good appearance. In addition, in the resin composition (D2) or a molded article thereof, characteristics attributed to the block copolymer (A0) used as a raw material are likely to appear. Since the resin composition (D2) uses the modified hydrogenated product (A) obtained from the block copolymer (AO) having a high vinyl bond amount in the polymer block (A-2), it is possible to improve the vibration damping properties and the like in the resin composition (D2) or a molded article thereof. In addition, by appropriately selecting the type and the like of the polar resin (C) or the polyolefin resin (B), it is possible to improve the physical properties such as the tensile strength and the elongation property of the resin composition (D2) or a molded article thereof.

<Morphology of Resin Composition (D2)>

A preferred aspect of the resin composition (D2) has a sea-island structure in which domains containing the polar resin (C) are dispersed in an island shape in a matrix of the polyolefin resin (B), and more preferably has a structure in which a component mainly composed of the modified hydrogenated product (A) is present along the periphery of the domain mainly composed of the polar resin (C).

Fig. 2 is a schematic cross-sectional view showing an example of the sea-island structure in the resin composition (D2). As shown in Fig. 2, in the resin composition (D2) or a molded product thereof, a plurality of domains 10 are present in a matrix 20 made of the polyolefin resin (B). The domains 10 include a core portion 10a composed mainly of the polar polymer (C) and a shell portion 10b composed mainly of the modified hydrogenated product (A).

Fig. 3(a) is an enlarged cross-sectional photograph taken using a scanning type electron microscope (SEM), showing an example of the morphology of the resin composition (D2). Fig. 3(a) corresponds to Example 8 described later, in which domains containing the polar resin (C) are dispersed in an island shape in the matrix of the polyolefin resin (B).

Another preferred aspect of the resin composition (D2) has a sea-island structure in which domains containing the polyolefin resin (B) are dispersed in an island shape in the matrix of the polar resin (C), and more preferably has a structure in which a component mainly composed of the modified hydrogenated product (A) is present along the periphery of the domain mainly composed of the polyolefin resin (B).

As described above, since the modified hydrogenated product (A) having the polymer block (A-2) having a high vinyl bond amount promotes the compatibility between the polyolefin resin (B) and the polar resin (C), the domain mainly composed of the polar resin (C) and the domain mainly composed of the polyolefin resin (B), which are formed in the resin composition (D2) and the molded article thereof, can be fine, for example, having an average diameter of 500 nm or less.

The dispersion diameter of the domain mainly composed of the polar resin (C) or the domain mainly composed of the polyolefin resin (B) is preferably 0.01 to 8 pm, more preferably 0.02 to 6 μm, and still more preferably 0.03 to 4 pm. Here, the dispersion diameter is a volume average dispersion diameter of the major axis of the core-shell structure. To be specific, a cross section of a test piece having a thickness of 1 mm obtained by a sheet production method to be described later was exposed using an ultramicrotome, and the test piece was dyed with a 0.5% aqueous solution of ruthenium tetroxide and subjected to a vapor deposition treatment with platinum. Then, the cross section subjected to this treatment is observed by SEM, and the average value of the long diameters of 50 domains is defined as the volume average dispersion diameter.

The average diameter which is an average value of the dispersion diameters is preferably 500 nm or less, more preferably 400 nm or less, and still more preferably 300 nm or less. The lower limit value of the average diameter of the domain is not particularly limited, but is, for example, 100 nm or more.

When the volume average dispersion diameter or the average diameter of the domain is within the above-described numerical range, the dispersibility of the polar resin (C) in the polyolefin resin (B) or the dispersibility of the polyolefin resin (B) in the polar resin (C) can be improved, and the mechanical properties of the resin composition (D2) or the molded article of the resin composition (D2) can be improved.

In the domain mainly composed of the polar resin (C), one or more subdomains composed of a component different from that of the polar resin (C) may be included. Examples of the subdomains include a domain composed of the polyolefin resin (B), the modified hydrogenated product (A), and a polymer, a hydrogenated product, or the like before modification. When the core-shell structure including a domain composed of a component different from that of the polar resin (C) is present as described above, the impact resistance is easily improved. In addition, one or more subdomains composed of components different from those of the polyolefin resin (B) may be included in the domain mainly composed of the polyolefin resin (B). Examples of the subdomains include a domain composed of the polar resin (C), the modified hydrogenated product (A), and a polymer, a hydrogenated product, or the like before modification. When the core-shell structure including a domain composed of a component different from that of the polyolefin resin (B) is present as described above, the impact resistance is easily improved.

<Polar Resin (C)>

The polar resin (C) contained in the resin composition (D2) refers to a resin having a polar group such as a carboxy group, a sulfonic acid group, a hydroxy group, or a cyano group; a resin having an ether bond, an ester bond, an amide bond, a sulfide bond, or the like in the resin; a resin containing at least one of oxygen, nitrogen, sulfur, and halogen in the molecule; and the like, and is a resin that causes electronic polarization in the molecule and has thermoplastic properties.

The polar resin (C) is preferably a resin having a polar group such as a sulfonic acid group or a cyano group, a resin having an ether bond, an ester bond, an amide bond, a sulfide bond, or the like in the resin, a resin containing at least one of oxygen, nitrogen, sulfur, and halogen in the molecule, and the like, and more preferably a resin having at least one of an ether bond, an ester bond, and an amide bond in the resin.

Preferred polar resins are at least one selected from the group consisting of polyamide resins such as nylon 6, nylon 66, nylon 610, nylon 9, nylon 6/66, nylon 66/610, nylon 6/11, nylon 6/12, nylon 12, nylon 46, and amorphous nylon; polyester resins such as polyethylene terephthalate, polyethylene naphthalate, polybutylene terephthalate, and polylactic acid; polyacetal resins such as polyoxymethylene homopolymer and polyoxymethylene copolymer; polyphenylene sulfide (PPS) resin, polyphenylene ether resin, polyarylate resin, polyether sulfone resin, polyurethane resin, polyvinyl alcohol-based resin, polycarbonate resin, ethylene-vinyl acetate copolymer, ethylene-methacrylic acid copolymer, polyether ketone, polyether ether ketone, polyvinyl chloride, polyvinylidene chloride, polyacrylonitrile, vinylon, triacetyl cellulose, ABS resin, AS resin, ACS resin, xylene resin, acrylic resin, and polyester-based thermoplastic elastomer.

More preferred polar resins are at least one resin selected from a polyamide resin, a polyester resin, a polyacetal resin, a polyphenylene sulfide resin, a polyurethane resin, a polyvinyl alcohol-based resin, a polycarbonate resin, and a polyester-based thermoplastic elastomer, and still more preferred polar resins are at least one resin selected from a polyamide resin, a polyvinyl alcohol-based resin, a polyester-based resin, and a polycarbonate resin.

The polyester-based thermoplastic elastomer used as the polar resin (C) can be obtained, for example, by using (i) an aliphatic and/or alicyclic diol having 2 to 12 carbon atoms, (ii) an aromatic dicarboxylic acid or an alkyl ester thereof, and (iii) a polyalkylene ether glycol as raw materials and subjecting an oligomer obtained by an esterification reaction or a transesterification reaction of these to a polycondensation reaction.

Examples of the commercially available polyester-based thermoplastic elastomer include HYTREL 3046 (registered trademark) manufactured by Dupont-Toray Co., Ltd.

<Additives>

The resin composition (D2) may contain various additives to the extent that the effects of the present invention are not impaired. Examples of such additives are the same as those described for the resin composition (D1).

The content of the additive in the resin composition (D2) is not limited, and can be appropriately adjusted according to the type of the additive, the application of the resin composition (D2), and the like. When the resin composition (D2) contains the additive, the content of the additive may be, for example, 50% by mass or less, 45% by mass or less, 30% by mass or less, 20% by mass or less, and 10% by mass or less, or may be 0.01% by mass or more, 0.1% by mass or more, 1% by mass or more, and 5% by mass or more, with respect to the total mass of the resin composition (D2). In other words, the content of the additive in the resin composition (D2) is preferably 0.01 to 50% by mass.

<Proportion of Each Component in Resin Composition (D2)>

The proportion of the polar resin (C) in the resin composition (D2) is preferably 10 to 90% by mass with respect to the total mass of the resin composition (D2). From the viewpoint of the flexibility of the composition, the proportion is more preferably 10 to 50% by mass, still more preferably 10 to 45% by mass, and even more preferably 10 to 40% by mass. On the other hand, from the viewpoint of the mechanical strength, the proportion is more preferably 50 to 90% by mass, still more preferably 50 to 85% by mass, and even more preferably 50 to 80% by mass with respect to the total mass of the resin composition (D2).

Further, in the resin composition (D2), when the mass of the polyolefin resin (B) is Bb and the mass of the polar resin (C) is C, from the viewpoint of the flexibility of the composition, Bb/C is preferably 90/10 to 50/50, more preferably 90/10 to 55/45, still more preferably 90/10 to 60/40, even more preferably 90/10 to 70/30, and particularly preferably 90/10 to 75/25. On the other hand, from the viewpoint of the mechanical strength, Bb/C is preferably 50/50 to 10/90, more preferably 50/50 to 15/85, still more preferably 50/50 to 20/80, even more preferably 50/50 to 25/75, and particularly preferably 50/50 to 30/70.

When the Bb/C is within the above range, physical properties such as vibration damping properties can be improved while suppressing a significant decrease in mechanical properties of the polyolefin resin (B).

In the resin composition (D2), when the mass of the modified hydrogenated product (A) is Ab and the mass of the polyolefin resin (B) is Bb, Ab/Bb is preferably 30/70 to 1/99, more preferably 25/75 to 3/98, and still more preferably 20/80 to 5/95 from the viewpoint of easily exhibiting characteristics such as vibration damping properties of the modified hydrogenated product (A).

In addition to the resin composition (D1) and the polar resin (C), the resin composition (D2) may further contain a block copolymer (A0) or a hydrogenated product (A1) thereof. From the viewpoint of mechanical properties, the total content of the block copolymer (AO) and the hydrogenated product (A1) thereof is preferably 1 to 20% by mass, more preferably 1 to 10% by mass, and still more preferably 1 to 5% by mass with respect to the total mass of the resin composition (D2).

In addition, the resin composition (D2) may contain a resin component other than the modified hydrogenated product (A), the polyolefin resin (B), the block copolymer (A0), and the hydrogenated block copolymer (A1). For example, a non-polar resin other than the polyolefin resin (B) may be contained in the resin composition (D2). An aspect in which only the polyolefin resin (B) is contained as the non-polar resin is a preferred aspect of the resin composition (D2).

From the viewpoint of ensuring the vibration damping properties and the mechanical properties of the resin composition (D2), in the resin composition (D2), the content of the resin component contained in addition to the modified hydrogenated product (A), the polyolefin resin (B), the block copolymer (A0), and the hydrogenated block copolymer (A1) is preferably 0 to 50% by mass, more preferably 0 to 30% by mass, still more preferably 0 to 20% by mass, even more preferably 0 to 10% by mass, and most preferably 0 to 5% by mass.

<Characteristics of Resin Composition (D2)>

(Loss Tangent (Tan δ))

From the viewpoint of exhibiting good vibration damping properties in a wide temperature range, the resin component (D2) has a peak intensity of loss tangent (tan δ) at 0 to 50°C of preferably 0.1 to 2.0, more preferably 0.1 to 1.0, and still more preferably 0.1 to 0.5, the loss tangent (tan δ) being measured under conditions of a strain amount of 0.1%, a frequency of 10 Hz, a measurement temperature of -100 to +150°C, and a temperature raising rate of 3°C/min in accordance with JIS K 7244-10 (2005).

The good vibration damping properties in a wide temperature range of the resin composition (D2) can be achieved by adjusting the type of the block copolymer (A0), the type and content ratio of the monomer used in the modified hydrogenated product (A), the balance between the vinyl bond amount and the hydrogenation rate, the selection of the production method of the modified hydrogenated product (A), the control of each component of the modified hydrogenated product (A), or the combination and content ratio of the polar resin (C) and the polyolefin resin (B) used in the resin composition (D2).

(Tensile Strain at Break)

In addition, in accordance with JIS K 7161-1 (2014), the resin composition (D2) has a tensile strain at break of preferably 25% or more, more preferably 30% or more, still more preferably 50% or more, even more preferably 75% or more, yet still more preferably 100% or more, yet even more preferably 150%, further still more preferably 200% or more, further even more preferably 250% or more, and yet further still more preferably 300% or more, the tensile strain at break being measured under the condition of a tensile speed of 50 mm/min using a multipurpose test piece A1 type as a test piece, from the viewpoint of mechanical strength.

(Hardness)

The resin composition (D2) has a type D durometer hardness of preferably 20 to 90, more preferably 25 to 85, and still more preferably 30 to 80 at an atmospheric temperature of 23°C, as measured in accordance with JIS K 6253-3 (2012), from the viewpoint of flexibility.

<Method for Producing Resin Composition (D2)>

The polymer composition (D2) can be produced by mixing the polar resin (C) and the resin composition (D1) with various additives as necessary using a mixer such as a Henschel mixer, a V blender, a ribbon blender, a tumbler blender, or a conical blender, or by subsequently melt-kneading the mixture at about 80 to 350°C using a kneader such as a single screw extruder, a twin screw extruder, a kneader, a Banbury mixer, or a roll.

In addition, the resin composition can also be prepared by dissolving and mixing the respective components in a solvent in which at least the polar resin (C) and the resin composition (D1) are soluble, and removing the solvent.

In the production of the resin composition (D2), it is sufficient that the polar resin (C) and the resin composition (D1) are mixed as a result, and there is no particular limitation on the mixing order of the individual components constituting these components. For example, the modified hydrogenated product (A) and the polyolefin resin (B) constituting the resin composition (D1) may be separately and sequentially added to and mixed with the polar resin (C), or the modified hydrogenated product (A) and the polyolefin resin (B) may be mixed and then added to and mixed with the polar resin (C), or the polar resin (C), the modified hydrogenated product (A), and the polyolefin resin (B) may be mixed together at once. As described above, the order of addition is not limited, but from the viewpoint of further improving the dispersibility and the physical properties of the resin composition (D2) to be obtained, the order of addition in which the modified hydrogenated product (A) and the polar resin (C) are added and then the polyolefin resin (B) is added is preferable.

The resin composition (D2) may be in any form such as a bale, a crumb, and a pellet. In addition, the resin composition (D2) may be formed into various molded articles by a melt kneading molding machine, or by an injection molding method, an injection compression molding method, an extrusion molding method, a blow molding method, a press molding method, a vacuum molding method, a foam molding method, and the like using a bale, a crumb, a pellet, or the like of the resin composition as a raw material.

<Applications of Resin Composition (D2)>

The resin composition (D2) can be used for various applications.

The resin composition (D2) of the present embodiment has excellent vibration damping properties and high

elongation characteristics, and can be used for various applications. Therefore, the present invention also provides a vibration damping material, a film, a sheet, and the like using the resin composition (D2).

In addition, it is possible to provide a multilayer body having an X layer containing the polymer composition (D2) and a Y layer laminated on at least one surface of the X layer. As the multilayer body, for example, a laminated glass is preferable, and by using the X layer as an intermediate film for a laminated glass and using a laminated glass in which the Y layer is glass, not only excellent vibration damping properties but also excellent sound insulation properties can be expected.

Other applications include pellets, bales, sound absorbing materials, sound insulating materials, dam rubbers, shoe sole materials, floor materials, weather strips, floor mats, dash insulators, roof linings, door panels, engine head covers, door hole seals, fender liners, and the like, and are also useful for these applications.

Further, the resin composition (D2) includes various automotive members in the automotive field, for example, cooling parts such as a thermostat housing, a radiator tank, a radiator hose, a water outlet, a water pump housing, and a rear joint; intake and exhaust system parts such as an intercooler tank, an intercooler case, a turbo duct pipe, an EGR cooler case, a resonator, a throttle body, an intake manifold, and a tail pipe; fuel system parts such as a fuel delivery pipe, a gasoline tank, a quick connector, a canister, a pump module, a fuel pipe, an oil strainer, a lock nut, and a sealing material; structural components such as a mount bracket, a torque rod, and a cylinder head cover; drive system components such as a bearing retainer, a gear tensioner, a headlamp actuator gear, an HVAC gear, a slide door roller, and clutch peripheral components; brake system components such as an air brake tube; in-vehicle electrical components such as a wire harness connector, a motor component, a sensor, an ABS bobbin, a combination switch, an in-vehicle switch, and an electronic control unit (ECU) box in an engine room; and interior and exterior parts such as slide door dampers, door mirror stays, door mirror brackets, inner mirror stays, roof rails, engine mount brackets, inlet pipes of air cleaners, door checkers, plastic chains, emblems, clips, breaker covers, cup holders, airbags, fenders, spoilers, radiator supports, radiator grills, louvers, air scoops, hood bulges, back doors, fuel sender modules, floor mats, instrument panels, dashboards, dash insulators, dam rubbers, weather strips, and tires.

In addition, the resin composition (D2) can be used as a sealing material, an adhesive agent, a pressure sensitive adhesive, a packing, an O-ring, a belt, a sound insulating material, and the like in various electrical products including various recorders such as a television, a blue-ray recorder and an HDD recorder, and a projector, a game machine, a digital camera, a home video, an antenna, a speaker, an electronic dictionary, an IC recorder, a FAX, a copying machine, a telephone, a door phone, a rice cooker, a microwave oven, an oven range, a refrigerator, a dishwasher, a dish dryer, an IH cooking heater, a hot plate, a vacuum cleaner, a washing machine, a charger, a sewing machine, an iron, a dryer, an electric bicycle, an air cleaner, a water purifier, an electric toothbrush, a lighting device, an air conditioner, an outdoor unit of an air conditioner, a dehumidifier, and a humidifier. It can also be used as a fiber.

## Examples

Hereinafter, the present invention will be specifically described with reference to Examples and Comparative Examples, but the present invention is not limited thereto.

### 1. Modified Hydrogenated Product (A)

### [Method for Measuring Physical Properties]

Methods for evaluating physical properties of the hydrogenated block copolymer (A1) and the modified hydrogenated products (A) obtained in Production Examples described later are described below.

### (1) Content of Polymer Block (A-1)

The block copolymer before hydrogenation was dissolved in $CDCl_3$ and subjected to $^1$H-NMR measurement [apparatus: "ADVANCE 400 Nano bay" (manufactured by Bruker), measurement temperature: 30°C], and the content of the polymer block (A-1) was calculated from the ratio of the peak intensity derived from styrene to the peak intensity derived from diene.

### (2) Weight Average Molecular Weight (Mw)

By gel permeation chromatography (GPC) measurement under the following conditions, the weight average molecular weight (Mw) in terms of polystyrene of the polymer block (A-1), the polymer block (A-2), the hydrogenated product of the block copolymer, and the modified hydrogenated product was obtained.

(GPC Measurement Apparatus and Measurement Conditions)

Apparatus: GPC apparatus "HLC-8020" (manufactured by Tosoh Corporation)

Separation column: "TSKgel GMHXL", "G4000HXL", and "G5000HXL" manufactured by Tosoh Corporation were connected in series.

- Eluent: tetrahydrofuran
- Eluent flow rate: 0.7 mL/min
- Sample concentration: 5 mg/10 mL
- Column temperature: 40°C
- Detector: differential refractive index (RI) detector
- Calibration curve: prepared using standard polystyrene

(3) Hydrogenation Rate in Polymer Block (A-2)

The hydrogenation rate was calculated from a ratio of the peak area derived from the residual olefin of isoprene and/or butadiene to the peak area derived from ethylene, propylene, and/or butylene by $^1$H-NMR measurement.

- Apparatus: nuclear magnetic resonance apparatus "ADVANCE 400 Nano bay" (manufactured by Bruker)
- Solvent: $CDCl_3$

(4) Vinyl Bond Amount in Polymer Block (A-2)

The block copolymer before hydrogenation was dissolved in $CDCl_3$ and subjected to $^1$H-NMR measurement [apparatus: "ADVANCE 400 Nano bay" (manufactured by Bruker), measurement temperature: 30°C]. The vinyl bond amount (total content of a 3,4-bond unit and a 1,2-bond unit) was calculated from the ratio between the total peak area of structural units derived from isoprene and/or butadiene and the peak area corresponding to each of a 3,4-bond unit and a 1, 2-bond unit in isoprene structural units, a 1,2-bond unit in butadiene structural units or, in the case of structural units derived from a mixture of isoprene and butadiene, the aforementioned bond units.

(5) Amount of Modification (phr) of Modified Hydrogenated Product (A)

The amount of modification by maleic anhydride of the modified hydrogenated product (A) was measured by the following procedure. After 5 g of the modified hydrogenated product (A) was dissolved in 180 mL of toluene, 20 mL of ethanol was added thereto, the solution was titrated with 0.1 mol/L potassium hydroxide solution, and the amount of modification was calculated using the following calculation formula.

$$\text{Amount of modification by maleic anhydride (phr)} = (\text{titration amount}) \times 5.611/(\text{sample amount}) \times 98 \times 100/56.11 \times 1000$$

(6) Amount of Modification (mol%) of Modified Hydrogenated Product (A)

From the amount of modification by maleic anhydride (phr) calculated above, the amount of modification (mol%) was calculated using the following calculation formula.

Amount of modification by maleic anhydride (mol%) = {[amount of modification by maleic anhydride (phr)]/[maleic anhydride molecular weight]}/{[amount of modification by maleic anhydride (phr)]/[maleic anhydride molecular weight] + [polymer block (A) content (% by mass)]/[polymer block (A) structural unit molecular weight] + [polymer block (B) content (% by mass)]/[polymer block (B) structural unit molecular weight]} × 100

(7) Glass Transition Temperature of Modified Hydrogenated Product (A)

The glass transition temperatures of modified hydrogenated products (Y-2) to (Y-7), which are the modified hydrogenated products (A) and will be described later, were measured using a DSC measurement apparatus (DSC250, manufactured by TA Instruments). To be specific, the measurement was performed under the conditions of a temperature range of -120°C to +350°C and a temperature raising rate of 10°C/min using the above apparatus, and the temperature

at the inflection point of the baseline shift due to glass transition was defined as the glass transition temperature.

In addition, the glass transition temperature of a hydrogenated product (Y-1) of a block copolymer was also measured in the same manner.

(8) Peak Top Temperature and Peak Top Intensity of tan δ

The peak top temperature and intensity of tan δ of the modified hydrogenated products (Y-2) to (Y-7), which are the modified hydrogenated products (A) and will be described later, were obtained by pressing the modified hydrogenated product (A) at a temperature of 230°C and a pressure of 10 MPa for 3 minutes to prepare a single layer sheet having a thickness of 1.0 mm, cutting the single layer sheet into a disc shape, and using the disc-shaped sheet as a test piece. For the measurement, based on JIS K 7244-10 (2005), a strain-controlled dynamic viscoelasticity measuring device "ARES-G2" (manufactured by TA Instruments) having a disc diameter of 8 mm was used as a parallel-plate oscillatory rheometer.

The clearance between the two flat plates was completely filled with the test sheet, oscillation was applied to the test sheet at a frequency of 1 Hz with a strain amount of 0.1%, the temperature was raised from -70°C to 200°C at a constant rate of 3°C/min, and the maximum value of the peak intensity of tan δ (peak top intensity) and the temperature at which the maximum value was obtained (peak top temperature) were obtained.

[Production Example 1]

(Production of Hydrogenated Product (Y-1) of Block Copolymer)

To a nitrogen-purged and dried pressure-resistant container, 50 kg of cyclohexane as a solvent and 87 g of a cyclohexane solution of sec-butyllithium having a concentration of 10.5% by mass (substantial addition amount of sec-butyllithium: 9.14 g) as an anionic polymerization initiator were charged.

After the temperature in the pressure-resistant container was raised to 50°C, 1.0 kg of styrene (1) was added and polymerized for 1 hour, 33 g of 2,2-di(2-tetrahydrofuryl)propane (DTHFP) was added as a Lewis base at a temperature in the container of 50°C, a liquid mixture of 8.16 kg of isoprene and 6.48 kg of butadiene was added over 5 hours, polymerized for 2 hours, and 1.0 kg of styrene (2) was further added and polymerized for 1 hour, thereby obtaining a reaction liquid containing a polystyrene-poly(isoprene/butadiene)-polystyrene triblock copolymer.

A Ziegler-based hydrogenation catalyst formed from nickel octylate and trimethylaluminum was added to the reaction liquid under a hydrogen atmosphere, and the reaction was carried out under conditions of a hydrogen-pressure of 1 MPa and 80°C for 5 hours. After allowing the reaction liquid to cool and releasing the pressure, the above catalyst was removed by washing with water, and the residue was dried in vacuo to obtain a hydrogenated product of a polystyrene-poly(isoprene/butadiene)-polystyrene triblock copolymer (hereinafter, referred to as Y-1).

Each raw material and the amount used thereof are shown in Table 1, and the results of the evaluation of the physical properties are shown in Table 2.

[Production Example 2]

(Production of Modified Hydrogenated Product (Y-2))

Using a twin-screw extruder "ZSK 26mc" (26 mmφ, LID = 56) manufactured by Coperion GmbH under the following extrusion conditions, 10 kg of the hydrogenated block copolymer Y-1 obtained as described above was blended into a molten state, and 0.05 kg of 2,5-dimethyl-2,5-di(t-butylperoxy)hexane (PERHEXA 25B-40, manufactured by NOF Corporation) as a radical initiator and 0.15 kg of maleic anhydride as a modifying agent were blended to perform a modification reaction, thereby obtaining a modified hydrogenated product (Y-2).

Each raw material and the amount used thereof are shown in Table 1, and the results of the evaluation of the physical properties are shown in Table 2.

[Production Example 3]

(Production of Modified Hydrogenated Product (Y-3))

A hydrogenated product of a block copolymer was prepared in the same manner as in Production Example 1 except that 73.4 g of a cyclohexane solution of sec-butyllithium having a concentration of 10.5% by mass (substantial addition amount of sec-butyllithium: 7.71 g) was used as an anionic polymerization initiator. Further, the hydrogenated product was modified with maleic acid in the same procedure as in Production Example 2 to prepare a modified hydrogenated product (Y-3).

Each raw material and the amount used thereof are shown in Table 1, and the results of the evaluation of the physical properties are shown in Table 2.

[Production Example 4]

(Production of Modified Hydrogenated Product (Y-4))

A hydrogenated product of a block copolymer was prepared in the same manner as in Production Example 1 except that the amounts of isoprene and the catalyst were changed as shown in Table 1 and butadiene was not used. Further, the hydrogenated product was modified with maleic acid in the same procedure as in Production Example 2, except that the amounts of maleic anhydride and the radical initiator were changed to those shown in Table 1, to prepare a modified hydrogenated product (Y-4).

Each raw material and the amount used thereof are shown in Table 1, and the results of the evaluation of the physical properties are shown in Table 2.

[Production Example 5]

(Production of Modified Hydrogenated Product (Y-5))

A hydrogenated product of a block copolymer was prepared in the same manner as in Production Example 1 except that the amounts of styrene (1), styrene (2), butadiene, and the catalyst were changed as shown in Table 1, isoprene was not used, and the Lewis base was changed to 110 g of tetrahydrofuran. Further, the hydrogenated product was modified with maleic acid in the same procedure as in Production Example 2, except that the amounts of maleic anhydride and the radical initiator were changed to those shown in Table 1, to prepare a modified hydrogenated product (Y-5).

Each raw material and the amount used thereof are shown in Table 1, and the results of the evaluation of the physical properties are shown in Table 2.

[Production Example 6]

(Production of Modified Hydrogenated Product (Y-6))

A hydrogenated product of a block copolymer was prepared in the same manner as in Production Example 1 except that the amounts of styrene (1), styrene (2), butadiene, and the catalyst were changed as shown in Table 1, isoprene was not used, and the Lewis base was changed to 110 g of tetrahydrofuran. Further, the hydrogenated product was modified with maleic acid in the same procedure as in Production Example 2, except that the amounts of maleic anhydride and the radical initiator were changed to those shown in Table 1, to prepare a modified hydrogenated product (Y-6).

Each raw material and the amount used thereof are shown in Table 1, and the results of the evaluation of the physical properties are shown in Table 2.

[Production Example 7]

(Production of Modified Hydrogenated Product (Y-7))

A hydrogenated product of a block copolymer was prepared in the same manner as in Production Example 1 except that the amounts of styrene (1), styrene (2), isoprene, butadiene, and the catalyst were changed as shown in Table 1, and the Lewis base was changed to 310 g of tetrahydrofuran. Further, the hydrogenated product was modified with maleic acid in the same procedure as in Production Example 2 to prepare a modified hydrogenated product (Y-7).

Each raw material and the amount used thereof are shown in Table 1, and the results of the evaluation of the physical properties are shown in Table 2.

Table 1

| | | | 1 | 2 | 3 | 4 | 5 | 6 | 7 |
|---|---|---|---|---|---|---|---|---|---|
| Modified hydrogenated product or Hydrogenated product | | | Y-1 | Y-2 | Y-3 | Y-4 | Y-5 | Y-6 | Y-7 |
| Amount used (kg) | Cyclohexane | | 50 | 50 | 50 | 50 | 50 | 50 | 50 |
| | sec-Butyllithium (10.5% by mass cyclohexane solution) | | 0.087 | 0.087 | 0.0734 | 0.087 | 0.21 | 0.20 | 0.082 |
| | (A-1) | Styrene (1) . | 1.0 | 1.0 | 1.0 | 1.0 | 2.5 | 1.7 | 0.5 |
| | | Styrene (2) | 1.0 | 1.0 | 1.0 | 1.0 | 2.5 | 1.7 | 1.5 |
| | (A-2) | Isoprene | 8.16 | 8.16 | 8.16 | 14.6 | | - | 8.17 |
| | | Butadiene | 6.48 | 6.48 | 6.48 | | 11.7 | 13.3 | 6.49 |
| | Lewis base | Tetrahydrofuran | | | | | 0.110 | 0.110 | 0.310 |
| | | DTHFP | 0.033 | 0.033 | 0.033 | 0.033 | | - | |
| | Hydrogenation | Al/Ni-based Ziegler catalyst | 3.1 | 3.1 | 3.1 | 4.5 | 1.4 | 1.2 | 1.8 |
| | Modification | Hydrogenated block copolymer | | 10 | 10 | 10 | 10 | 10 | 10 |
| | | Maleic anhydride | | 0.15 | 0.15 | 0.10 | 0.10 | 0.20 | 0.15 |
| | | Radical initiator | | 0.05 | 0.05 | 0.01 | 0.01 | 0.10 | 0.05 |

Table 2

| | 1 | 2 | 3 | 4 | 5 | 6 | 7 |
|---|---|---|---|---|---|---|---|
| Modified hydrogenated product or Hydrogenated product | Y-1 | Y-2 | Y3 | Y-4 | Y-5 | Y6 | Y7 |
| Structural unit of polymer block (A-1) | St | St | St | St | St | St | St |
| Component constituting polymer block (A-2) | Ip/Bd | Ip/Bd | Ip/Bd | Ip | Bd | Bd | Ip/Bd |
| Mass ratio of components constituting polymer block (A-2) | 55/45 | 55/45 | 55/45 | 100 | 100 | 100 | 55/45 |
| Molar ratio of components constituting polymer block (A-2) | 50/50 | 50/50 | 50/50 | 100 | 100 | 100 | 50/50 |
| Polymer structure | A/B/A | A/B/A | A/B/A | A/B/A | A/B/A | A/B/A | A/B/A |
| Content of polymer block (A-1) (% by mass) | 12 | 12 | 12 | 12 | 30 | 20 | 12 |
| Weight average molecular weight of polymer block (A-1) | 6,500 | 6,500 | 8,300 | 6,700 | 7,000 | 5,000 | 3,700 |
| Weight average molecular weight of polymer block (A-2) | 143,000 | 143,000 | 208,000 | 143,000 | 63,000 | 77,000 | 181,000 |
| Weight average molecular weight of hydrogenated block copolymer | 132,000 | 132,000 | 185,000 | 154,000 | 77,000 | 87,000 | 170,000 |
| Hydrogenation rate in polymer block (A-2) (mol%) | 91 | 91 | 97 | 91 | 99 | 99 | 90 |

(continued)

| | 1 | 2 | 3 | 4 | 5 | 6 | 7 |
|---|---|---|---|---|---|---|---|
| Vinyl bond amount in polymer block (A-2) (mol%) | 82 | 82 | 78 | 83 | 40 | 40 | 60 |
| Amount of modification by maleic anhydride (phr) | - | 0.80 | 0.80 | 0.40 | 0.50 | 1.50 | 0.80 |
| Amount of modification by maleic anhydride (mol%) | - | 0.54 | 0.54 | 0.30 | 0.33 | 0.93 | 0.54 |
| MFR at 230°C, 21 N (g/10 min) | 13.0 | 19.0 | 9.0 | 9.0 | 4.5 | 5.0 | 8.0 |
| Glass transition temperature (°C) | -3 | -2 | 4 | 20 | -57 | -56 | -27 |
| Peak top temperature of tan $\delta$ (°C) | 6.1 | 7.8 | 14.0 | 33.2 | -47.0 | -46.4 | -20.2 |
| Peak top intensity of tan $\delta$ | 2.07 | 1.89 | 2.10 | 2.09 | 0.35 | 0.42 | 2.13 |
| Weight average molecular weight of modified hydrogenated product | - | 135,000 | 187,000 | 156,000 | 109,000 | 97,700 | 172,000 |

As shown in Table 2, the hydrogenated product (Y-1) of the block copolymer of Production Example 1 was not modified. The vinyl bond amount of the polymer block (A-2) of the modified hydrogenated products (Y-2) to (Y-4) of Production Examples 2 to 4 is 82, 78, and 83 mol%, respectively, whereas the vinyl bond amount of the polymer block (A-2) of the modified hydrogenated products (Y-5) and (Y-6) of Production Examples 5 and 6 is 40 mol%, and the vinyl bond amount of the polymer block (A-2) of the modified hydrogenated product (Y-7) of Production Example 7 is 60 mol%.

In addition, as shown in Table 2, the hydrogenated product (Y-1) and the modified hydrogenated products (Y-2) to (Y-4) of the block copolymer exhibit a peak top intensity of tan $\delta$ of 1.0 or more, and the peak top temperature of tan $\delta$ is higher than that of the modified hydrogenated products (Y-5) and (Y-6). Therefore, it can be said that the above-described hydrogenated product (Y-1) and the modified hydrogenated products (Y-2) to (Y-4) have characteristics suitable as a vibration-damping material at a temperature closer to room temperature as compared with the above-described modified hydrogenated products (Y-5) and (Y-6). The modified hydrogenated product (Y-7) also exhibits a peak top intensity of tan $\delta$ of 1.0 or more, and the peak top temperature of tan $\delta$ is higher than that of the modified hydrogenated products (Y-5) and (Y-6). Therefore, the modified hydrogenated product (Y-7) has characteristics suitable as a vibration-damping material at a higher temperature than those of the modified hydrogenated products (Y-5) and (Y-6).

2. Resin Composition (D1) and Resin Composition (D2)

[Method for Measuring Physical Properties]

Methods for measuring physical properties of resin compositions obtained in Examples and Comparative Examples described later are shown below.

(1) Preparation of Test Piece Sheet and Test Piece

Each of the resin compositions obtained in Examples 1 to 12 and Comparative Examples 1 to 8 described later was preheated by a press-molding apparatus "NF-50H" (manufactured by Shinto Metal Industries, Ltd.) at a temperature of 230°C for 1 minute, and then pressurized at a pressure of 10 MPa for 3 minutes at the same temperature through a spacer having a predetermined thickness to prepare a sheet, and the sheet cut into a predetermined size was used as a test piece.

Regarding each of Examples 1 to 7 and Comparative Examples 1 to 3, a test piece or a sheet for obtaining the test piece for "tensile test", "hardness measurement", and "morphology observation" described later was set to be 15 cm in length × 15 cm in width × 0.1 cm in thickness, and a sheet for obtaining a test piece for "shearing peeling test" was set to be 15 cm in length × 15 cm in width × 0.05 cm in thickness. A sheet for obtaining a test piece for "impact resistance" measurement was set to be 15 cm in length × 15 cm in width × 0.4 cm in thickness. A test piece for "dynamic viscoelasticity measurement" was set to be 2 cm in length × 0.5 cm in width × 0.1 cm in thickness.

Regarding each of Examples 8 to 12 and Comparative Examples 4 to 8, a test piece or a sheet for obtaining

the test piece for "tensile test", "hardness measurement", and "impact resistance" described later was set to be 15 cm in length × 15 cm in width × 0.4 cm in thickness, and a test piece for "dynamic viscoelasticity measurement" was set to be 2 cm in length × 0.5 cm in width × 0.1 cm in thickness.

Regarding each of Examples 13 to 18 and Comparative Examples 9 to 15, a multi-purpose test piece Model A1 was prepared at a temperature shown in Table 5 below using an injection molding machine (C75SX manufactured by Toshiba Machine Co., Ltd.), and used as a test piece of each test item. As a test piece for "dynamic viscoelasticity measurement", a sheet was prepared in the same manner as in Examples 1 to 12 and Comparative Examples 1 to 8, and was set to be 2 cm in length × 0.5 cm in width × 0.1 cm in thickness.

(2) Shearing Peeling Test

Regarding each of Examples 1 to 7 and Comparative Examples 1 to 3, the above-described sheet having a thickness of 0.05 cm was cut into 34 mm in length × 10 mm in width to prepare a test piece for the "shearing peeling test".

The test piece was inserted between the upper surface of one end portion and the lower surface of the other end portion of a pair of metal plates as adherends, and pressed together with a 2.5 mm thick spacer for 2 minutes using the press-molding apparatus under the conditions of a press temperature of 200°C and a press pressure of 0 MPa to bond the two adherends.

Then, using a shearing peeling test apparatus Instron 3345 (manufactured by Instron), under the condition of a tensile speed of 5 mm/min, the end portions on the non-bonded side of the two adherends to be bonded were pulled in the opposite directions to each other to perform shearing peeling, thereby measuring the adhesive strength.

Two types of adherends were used: stainless steel sheet (SUS304) and aluminum alloy sheet (A5052P), each 120 mm in length × 35 mm in width × 1 mm in thickness.

(3) Tensile Test

Regarding each of Examples 1 to 7 and Comparative Examples 1 to 3, a dumbbell No. 3 test piece was prepared by cutting out the above sheet.

Using the above test piece, tensile elastic modulus (MPa), breaking stress (MPa), and breaking elongation (%) were measured at a tensile speed of 500 mm/min using Instron 3345 (manufactured by Instron) in accordance with JIS K 6251 (2017).

Regarding each of Examples 8 to 12 and Comparative Examples 4 to 8, a multi-purpose test piece Model A1 was prepared by cutting out the sheet, and regarding each of Examples 13 to 18 and Comparative Examples 9 to 15, the multi-purpose test piece Model A1 prepared by the above-described injection molding machine was used, and tensile elastic modulus (MPa), tensile strength (MPa), and tensile fracture strain (%) were measured at a tensile speed of 50 mm/min using Instron 3345 (manufactured by Instron) in accordance with JIS K 7161-1 (2014).

(4) Measurement of Hardness

In accordance with JIS K 6253-3 (2012), hardness was measured using a type D durometer (manufactured by Kobunshi Keiki Co., Ltd.).

(5) Measurement of Melt Flow Rate (MFR)

In accordance with JIS K 7210 (2014), the MFR of each resin composition was measured under the conditions of a temperature of 230°C and a load of 21 N by using a melt indexer (MELT INDEXER L241, manufactured by Tateyama Kagaku High-Technologies Co., Ltd.).

(6) Observation of Morphology 1

Using each of the resin compositions obtained in Example 4 and Comparative Examples 2 and 3, a sheet was prepared in the above-described procedure, and the sheet was used as a test piece. Then, the morphology of the cross section of the test piece was observed using an atomic force microscope (AFM).

In the observation, cross section exposure of the test piece was performed using an ultramicrotome (Leica EM FC7 manufactured by Leica Microsystems, Inc.). Then, the cross section of the test piece was observed using an AFM (SPM scanning probe microscope SPM-0700 manufactured by Shimadzu Corporation).

(7) Observation of Morphology 2

Using each of the resin compositions obtained in Example 8 and Comparative Examples 4 to 6, a sheet was prepared in the above-described procedure, and the sheet was used as a test piece. Then, the morphology of the cross section of the test piece was observed with a scanning electron microscope (SEM).

In the observation, the cross section of the test piece was exposed using an ultramicrotome (Leica EM FC7, manufactured by Leica Microsystems, Inc.), and the test piece was dyed with a 0.5% aqueous solution of ruthenium tetroxide and subjected to a vapor deposition treatment with platinum. Then, the cross section subjected to this treatment was observed by a SEM (JSM-6510 manufactured by JEOL Ltd.).

(8) Observation of Morphology 3

Using each of the resin compositions obtained in Examples 8 and 11 and Comparative Examples 4 and 5, a sheet was prepared in the above-described procedure, and the sheet was used as a test piece. Then, the morphology of the cross section of the test piece was observed with a scanning electron microscope (TEM).

In the observation, the test piece was cut into a thin film using an ultramicrotome (Leica EM FC7, manufactured by Leica Microsystems, Inc.), and dyed with a 0.5% aqueous solution of ruthenium tetroxide. Then, the dyed cross section was observed using a TEM (HT7700 manufactured by Hitachi High-Tech Corporation).

(9) Impact Resistance

Regarding each of Examples 8 to 12 and Comparative Examples 4 to 8, a test piece (thickness 4 mm, length 80 mm, width 10 mm (remaining width 8 mm after notch processing)) was prepared by cutting out the sheet of the resin composition described above. Regarding each of Examples 13 to 18 and Comparative Examples 9 to 15, both ends of the multi-purpose test piece Model A1 were cut to form a test piece (thickness 4 mm, length 80 mm, width 10 mm (remaining width 8 mm after notch processing)). Then, in accordance with JIS K 7111-1:2012, using a digital impact tester IT type (manufactured by Toyo Seiki Seisaku-sho, Ltd.), a hammer load was set to 2 J, and the Charpy impact value at 23°C was measured to evaluate the impact resistance (kJ/$m^2$).

(10) Dynamic Viscoelasticity Measurement

The measurement was carried out in accordance with JIS K 7244-4 (1999). To be specific, with respect to Examples 8 to 18 and Comparative Examples 4 to 15, the peak temperature and the peak intensity of tan $\delta$ at 0 to 50°C were measured by using the test pieces and using "DMA242" (manufactured by NETZSCH) under the condition of a frequency of 10 Hz while raising the temperature from -100°C to +150°C at 3°C/min. The larger the value of the peak intensity of tan $\delta$, the more excellent the vibration damping properties.

[Examples 1 to 7] and [Comparative Examples 1 to 3]

Using a small-sized torque detection motor unit ("Plastograph (registered trademark) EC" manufactured by Brabender GmbH & Co. KG) equipped with a mixer manufactured by Brabender GmbH & Co. KG with a mix proportion shown in Table 3, the mixture was melt-kneaded for 3 minutes under the conditions of a temperature of 230°C and a screw rotation speed of 100 rpm to prepare a resin composition of each of Examples 1 to 7 as a first resin composition (D1). In addition, resin compositions of Comparative Examples 1 to 3 were prepared in the same procedure.

The type and amount of each component used to prepare each resin composition and the measurement results are shown in Table 3 below. In addition, an AFM phase contrast image of the composition of Example 4 is shown in Fig. 1(a), and AFM phase contrast images of Comparative Examples 2 and 3 are shown in Fig. 1(b) and Fig. 1(c), respectively.

The components used in the preparation of each resin composition are as follows.

(Modified Hydrogenated Product (A))

- Modified hydrogenated products Y-2, Y-3, Y-4, Y-5, Y-6

(Hydrogenated Product of Block Copolymer)

- Hydrogenated product Y-1

(Polyolefin Resin (B))

- Random polypropylene (Prime Polypro J226T manufactured by Prime Polymer Co., Ltd., melt index (MI) = 20)

(Antioxidant)

- Phenol-based antioxidant Adekastab A4-60 (manufactured by ADEKA Corporation)

Table 3

| | | Example | | | | | | | Comparative Example | | |
|---|---|---|---|---|---|---|---|---|---|---|---|
| | | 1 | 2 | 3 | 4 | 5 | 6 | 7 | 1 | 2 | 3 |
| Amount used (part by mass) | Prime Polypro J226T | 90 | 80 | 70 | 50 | 30 | 70 | 70 | 70 | 50 | 50 |
| | Modified hydrogenated product Y-2 | 10 | 20 | 30 | 50 | 70 | - | - | - | - | - |
| | Modified hydrogenated product Y-3 | - | - | - | - | - | 30 | - | - | - | - |
| | Modified hydrogenated product Y-4 | - | - | - | - | - | - | 30 | - | - | - |
| | Hydrogenated product Y- 1 | - | - | - | - | - | - | - | 30 | - | - |
| | Modified hydrogenated product Y-5 | | - | - | - | - | - | - | - | 50 | - |
| | Modified hydrogenated product Y-6 | - | - | - | - | - | - | - | - | - | 50 |
| | Adekastab AO-60 | 0.1 | 0.1 | 0.1 | 0.1 | 0.1 | 0.1 | 0.1 | 0.1 | 0.1 | 0.1 |
| Hardness (Type D) | - | 63 | 62 | 55 | 47 | 36 | 55 | 58 | 50 | 50 | 43 |
| MFR (230°C, 21 N) | g/10 min | 19.8 | 20.2 | 18.7 | 15.1 | 17.6 | 16.2 | 9.1 | 18.4 | 5.7 | 0.4 |
| Tensile elastic modulus | MPa | 295 | 246 | 158 | 71 | 26 | 161 | 179 | 168 | 113 | 98 |
| Breaking stress | MPa | 19.2 | 26.4 | 31.3 | 21.8 | 21.3 | 30.7 | 30.1 | 30.1 | 37 | 20 |
| Breaking elongation | % | 980 | 980 | 780 | 720 | 700 | 760 | 750 | 740 | 620 | 860 |
| Adhesive strength (aluminum) | $N/mm^2$ | 3.77 | 6.77 | 7.31 | 4.78 | 5.74 | 7.23 | 8.06 | 0.01 | 2.07 | 1.46 |

(continued)

| | | Example | | | | | | | Comparative Example | | |
|---|---|---|---|---|---|---|---|---|---|---|---|
| | | 1 | 2 | 3 | 4 | 5 | 6 | 7 | 1 | 2 | 3 |
| Adhesive strength (SUS) | N/mm$^2$ | 6.30 | 9.26 | 9.32 | 7.17 | 7.23 | 10.58 | 13.07 | 0.01 | 3.23 | 1.54 |

As is clear from Table 3, it can be seen that the resin compositions of Examples 1 to 7 exhibit high adhesiveness to aluminum and stainless steel.

In addition, when Example 4 is compared with Comparative Examples 2 and 3, first, as is clear from Table 3, it can be seen that the resin composition of Example 4 has a large MFR and high fluidity. As is clear from Fig. 1(a) to Fig. 1(c), in the resin composition of Example 4, a fine co-continuous structure having a width of about several nm is formed, whereas in the resin compositions of Comparative Examples 2 and 3, the width of the co-continuous structure is about 1 $\mu$m to several pm, which is rougher than the co-continuous structure of the resin composition of Example 4.

From these, it can be seen that by using the modified hydrogenated product (A) in which the polymer block (A-2) has a vinyl bond amount in a specific range, a fine co-continuous structure is formed in the resin composition (D1), the tensile elastic modulus is lowered, and the polyolefin resin (B) is made flexible, and that high fluidity is imparted to the resin composition (D1), and as a result, high adhesiveness to the metal to be adhered is exhibited.

[Examples 8 to 12] and [Comparative Examples 4 to 8]

Using a small-sized torque detection motor unit ("Plastograph (registered trademark) E C" manufactured by Brabender GmbH & Co. KG) equipped with a mixer manufactured by Brabender GmbH & Co. KG with a mix proportion shown in Table 4, the mixture was melt-kneaded for 3 minutes under the conditions of a temperature of 230°C and a screw rotation speed of 100 rpm to prepare a resin composition of each of Examples 8 to 12 as a second resin composition (D2). In addition, resin compositions of Comparative Examples 4 to 8 were prepared in the same procedure.

The type and amount of each component used to prepare each resin composition and the measurement results are shown in Table 4 below. The results of the viscoelasticity measurement are shown in Fig. 5. In addition, an enlarged cross-sectional SEM photograph of Example 8 is shown in Fig. 3(a), and enlarged cross-sectional SEM photographs of Comparative Examples 4 to 6 are shown in Fig. 3(b) to Fig. 3(d), respectively. In addition, enlarged cross-sectional TEM photographs of Example 8 and Example 11 are shown in Fig. 4(a) and Fig. 4(b), respectively, and enlarged cross-sectional TEM photographs of Comparative Example 4 and Comparative Example 5 are shown in Fig. 4(c) and Fig. 4(d), respectively.

The components used in the preparation of each resin composition are as follows.

(Modified Hydrogenated Product (A))

- Modified hydrogenated products Y-2, Y-3, Y-4, Y-5, Y-6

(Polyolefin Resin (B))

- Random polypropylene (Prime Polypro F327 manufactured by Prime Polymer Co., Ltd., MI = 7)

(Polar Resin (C))

- Polyamide 6 (UBE Nylon 1013B manufactured by Ube Industries, Ltd.) (Maleic Anhydride-Modified Polypropylene)
- ADMER QE840 manufactured by Mitsui Chemicals, Inc. (Maleic Anhydride-Modified Ethylene $\alpha$-Olefin Copolymer)
- Tafmer MH5020 manufactured by Mitsui Chemicals, Inc.

(Antioxidant)

- Phenol-based antioxidant Adekastab AO-60 (manufactured by ADEKA Corporation)

Table 4

| Component name/Evaluation item-Unit | | Example | | | | | Comparative Example | | | | |
|---|---|---|---|---|---|---|---|---|---|---|---|
| | | 8 | 9 | 10 | 11 | 12 | 4 | 5 | 6 | 7 | 8 |
| Amount used (part by mass) | Prime Polypro F327 | 80 | 80 | 80 | 80 | 80 | 80 | 80 | 80 | 80 | 80 |
| | UBE nylon 1013B | 20 | 20 | 20 | 20 | 20 | 20 | 20 | 20 | 20 | 20 |
| | Modified hydrogenated product Y-2 | 5 | 10 | 20 | - | - | - | - | - | - | - |
| | Modified hydrogenated product Y-3 | - | - | - | 5 | | | | | | - |
| | Modified hydrogenated product Y-4 | | | | - | 5 | | | | | |
| | Modified hydrogenated product Y-5 | - | - | - | - | - | - | 5 | - | - | - |
| | Modified hydrogenated product Y-6 | - | | - | - | - | - | - | 5 | - | - |
| | ADMER QE840 | - | - | - | - | - | - | - | - | 5 | - |
| | Tafmer MH5020 | - | - | - | - | - | - | - | - | - | 5 |
| | Adekastab AO-60 | 0.1 | 0.1 | 0.1 | 0.1 | 0.1 | 0.1 | 0.1 | 0.1 | 0.1 | 0.1 |
| Kneading and molding temperature | °C | 230 | 230 | 230 | 230 | 230 | 230 | 230 | 230 | 230 | 230 |
| Hardness (Type D) | - | 69 | 68 | 63 | 69 | 70 | 71 | 69 | 69 | 71 | 69 |
| Tensile elastic modulus | MPa | 349 | 298 | 230 | 353 | 423 | 420 | 337 | 307 | 440 | 329 |
| Tensile strength | MPa | 19.6 | 19.8 | 19.3 | 19.4 | 17.3 | 18.4 | 15.8 | 13.6 | 21.0 | 15.2 |
| Tensile strain at break | % | 300 | 690 | 590 | 360 | 200 | 20 | 115 | 120 | 190 | 120 |
| Charpy impact value | $KJ/m^2$ | 7 | - | 14 | 6 | - | 2 | 6 | - | 3 | 10 |
| Peak temperature of tan δ | °C | 14.9 | 14.9 | 14.9 | 16.3 | 18.4 | 7.9 | 8.9 | 8.9 | 7.0 | 15.1 |
| Peak intensity of tan δ | - | 0.112 | 0.119 | 0.172 | 0.161 | 0.174 | 0.081 | 0.077 | 0.086 | 0.048 | 0.060 |
| MFR | g/10 min | 6.5 | 5.8 | 4.6 | 5.1 | 6.7 | 10.3 | 7.0 | 5.5 | 10.5 | 5.3 |

As shown in Table 4, it can be seen that all of the resin compositions of Examples 8 to 12 have a larger tensile strain at break than those of Comparative Examples, and in particular, the resin compositions of Examples 8 to 11 have a very large tensile strain at break as compared with those of Comparative Examples. In addition, when the resin compositions of Examples 8 and 11 are compared with Comparative Example 4, which is a resin composition containing no modified hydrogenated product, and Comparative Example 5, which is a resin composition containing a modified hydrogenated product having a small amount of vinyl bonds, since the Charpy impact values of the former are equal to or higher than the Charpy impact values of the latter, it can be seen that the resin compositions of Examples are easy to increase the impact resistance. Further, as is clear from Fig. 3(a), in the resin composition of Example 8, it can be seen that the polyamide resin as the polar resin (C) is dispersed in the random polypropylene as the polyolefin resin (B) with a fine diameter of about several tens to several hundreds nm. Furthermore, as is clear from Fig. 4(a) and Fig. 4(b), it can be seen that in the resin composition of Example 11 as well, a sea-island structure in which domains are the same as those in Example 8 is formed. From these results, it can be understood that in the resin compositions of Examples 8 to 12, the polar resin (C) is well compatible with the polyolefin resin (B).

In addition, as is clear from Table 4 and Fig. 5, it can be understood that the resin compositions of Examples 8 to 10 have a high tan $\delta$ peak intensity in the temperature range of 0 to 50°C and exhibit good vibration damping properties in this temperature range.

In contrast, in the resin compositions of Comparative Examples 4 to 6, it can be seen that the dispersion of the polar resin (C) is biased, and the dispersion diameter thereof is very large as compared with Examples 6 to 8 (see Fig. 3(b) to Fig. 3(d)). Further, as shown in Fig. 4(c), in the resin composition of Comparative Example 4, voids are formed around the domains and cracks are generated in the matrix of the polyolefin resin (B) starting from the domains, reflecting the difference in shrinkage rate during molding between the polyolefin resin (B) and the polyamide resin as the polar resin. Further, as shown in Fig. 4(d), in the resin composition of Comparative Example 5, it can be seen that a large number of dispersions are aggregated to form a large aggregate. Furthermore, as shown in Table 4, it is understood that in the resin compositions of Comparative Examples 4 to 8, the tensile strain at break is lower than that of the resin compositions of Examples 8 to 12. In particular, in Comparative Example 4 in which the modified hydrogenated product is not used, the tensile strain at break is remarkably low, and it can be seen that the compatibility between the polar resin (C) and the polyolefin resin (B) is inferior. In addition, Examples 8 to 10 have a higher tensile strength than Comparative Examples 5 and 6. It is assumed that this is because the compatibility of the resin component included in the resin composition of Examples 8 to 10 is good, and thus the interface strength between the polypropylene and the polyamide is improved.

[Examples 13 to 18] and [Comparative Examples 9 to 15]

Using a twin-screw extruder (ZSK-26mc, manufactured by Coperion GmbH) with a mix proportion shown in Table 5, the mixture was melt-kneaded at the temperature shown in Table 5 under the condition of a screw rotation speed of 300 rpm, and discharged at a rate of 10 kg/h. Thus, a resin composition of each of Examples 13 to 18 was prepared as a second resin composition (D2). In addition, resin compositions of Comparative Examples 9 to 15 were prepared in the same procedure.

The type and amount of each component used to prepare each resin composition and the measurement results are shown in Table 5 below.

The components used in the preparation of each resin composition are as follows.

(Modified Hydrogenated Product (A))

- Modified hydrogenated products Y-3, Y-6, Y-7

(Polyolefin Resin (B))

- Random polypropylene (Prime Polypro F327 manufactured by Prime Polymer Co., Ltd., MI = 7)
- Homopolypropylene (Prime Polypro J106G manufactured by Prime Polymer Co., Ltd., MI = 15)

(Polar Resin (C))

- Polyamide 6 (UBE Nylon 1013B manufactured by Ube Industries, Ltd.)
- Polybutylene terephthalate (TORAYCON 1401 manufactured by Toray Industries, Inc.)
- Polycarbonate (Iupilon S3000 manufactured by Mitsubishi Engineering-Plastics Corporation)
- Polylactic acid (Ingeo 3001D manufactured by Nature Works LLC)

(Maleic Anhydride-Modified Polypropylene)

- ADMER QE840 manufactured by Mitsui Chemicals, Inc.

(Antioxidant)

- Phenol-based antioxidant Adekastab AO-60 (manufactured by ADEKA Corporation)

Table 5

| Component name/Evaluation item•Unit | | Example 13 | Example 14 | Example 15 | Example 16 | Example 17 | Example 18 | Comparative Example 9 | Comparative Example 10 | Comparative Example 11 | Comparative Example 12 | Comparative Example 13 | Comparative Example 14 | Comparative Example 15 |
|---|---|---|---|---|---|---|---|---|---|---|---|---|---|---|
| Amount used (part by mass) | Prime Polypro F327 | 80 | - | - | 80 | 20 | 80 | - | - | - | 80 | 20 | 80 | 80 |
| | Prime Polypro J106G | - | 20 | 20 | - | - | - | 20 | 20 | 20 | - | - | - | - |
| | UBE nylon 1013B | 20 | 80 | 80 | - | - | - | 80 | 80 | 80 | - | - | - | - |
| | TORAYCON 1401 | - | - | - | 20 | - | - | - | - | - | 20 | - | - | - |
| | Iupilon S3000 | - | - | - | - | 80 | - | - | - | - | - | 80 | - | - |
| | Ingeo 3001D | - | - | - | - | - | 20 | - | - | -. | - | - | 20 | 20 |
| | Modified hydrogenated product Y-3 | - | 5 | 10 | 5 | 5 | 5 | - | - | - | - | - | - | - |
| | Modified hydrogenated product Y-6 | - | - | - | - | - | - | - | 5 | - | - | - | - | 5 |
| | Modified hydrogenated product Y-7 | 5 | - | - | - | - | - | | | | - | - | - | - |
| | ADMER QE840 | - | | | - | - | - | - | - | 5 | - | - | | - |
| | Adekastab AO-60 | 0.1 | 0.1 | 0.1 | 0.1 | 0.1 | 0.1 | 0.1 | 0.1 | 0.1 | 0.1 | 0.1 | 0.1 | 0.1 |
| Kneading and molding temperature | °C | 230 | 250 | 250 | 250 | 280 | 230 | 250 | 250 | 250 | 250 | 280 | 250 | 280 |
| Hardness (Type D) | - | 70 | 74 | 73 | 67 | 75 | 70 | 76 | 72 | 71 | 66 | 74 | 71 | 69 |
| Tensile elastic modulus | MPa | 323 | 2420 | 2350 | 810 | 1800 | 360 | 2680 | 1941 | 2690 | 940 | 1860 | 410 | 348 |
| Tensile strength | MPa | 17.2 | 46.0 | 40.0 | 19.0 | 45.0 | 17.2 | 48.0 | 45.0 | 45.0 | 17.0 | 39.0 | 15.8 | 13.9 |
| Tensile strain at break | % | 310 | 85 | 110 | 360 | 90 | 340 | 20 | 50 | 20 | 74 | 10 | 40 | 180 |
| Charpy impact value | $KJ/m^2$ | 8 | 7 | 13 | 4 | 45 | 7 | 4 | 8 | 4 | 2 | 11 | 3 | 5 |
| Peak temperature of tan δ | °C | 14.4 | 48.8 | 49.4 | 13.3 | 48.6 | 15.9 | 48.9 | 49.2 | 8.0 | 5.2 | 49.7 | 7.8 | 8.7 |
| Peak intensity of tan δ | - | 0.147 | 0.107 | 0.114 | 0.133 | 0.105 | 0.165 | 0.067 | 0.088 | 0.027 | 0.084 | 0.064 | 0.079 | 0.082 |
| MFR | g/10 min | 3.7 | 14.9 | 10.3 | 15.1 | 7.3 | 5.9 | 21.4 | 12.7 | 20.2 | 19.5 | 9.1 | 9.8 | 6.2 |

As shown in Table 5, it can be understood that the resin compositions of Examples 13 to 18 have a large peak intensity of tan δ and are excellent in vibration damping properties as compared with the resin compositions of Comparative Examples 9 to 15 in which a modified hydrogenated product having a vinyl bond amount of the polymer block (A-2) of 50 to 99 mol% is not used.

Further, as shown in Table 5, it can be seen that the resin compositions of Examples 14 to 17 have a high tensile elastic modulus and more favorable mechanical strength as compared with the resin compositions of Examples 13 and 18. In particular, since the resin compositions of Examples 14, 15, and 17 have a particularly high tensile elastic modulus and high tensile strength, it can be seen that the resin compositions have more excellent mechanical strength.

Further, it can be seen that the resin compositions of Examples 13, 16, and 18 have a larger tensile strain at break and have excellent elongation properties as compared with the resin compositions of Examples 14, 15, and 17. Furthermore, it can be seen that the resin composition of Example 17 has a remarkably large Charpy impact value and particularly excellent impact resistance, as compared with the resin compositions of Comparative Examples 9 to 15 and the resin compositions of Examples 13 to 16 and 18.

Industrial Applicability

Since the first resin composition and the adhesive agent of the present invention exhibit good adhesiveness to various materials, they can be used in a wide range of fields such as automobiles, electrical products, and building materials. In addition, since the second resin composition of the present invention has good mechanical properties such as high vibration damping properties in a wide temperature range and high elongation properties, it can be used for pellets, bales, vibration damping materials, sound insulation materials, shoe sole materials, floor materials, adhesive agents, pressure sensitive adhesives, multilayer bodies, fibers, automobile parts, and the like.

Further, since the compatibilizer of the present invention has a high compatibility, it can be used in a field such as recycling of a container of food packaging.

Reference Signs List

10: Domain
10a: Core portion
10b: Shell portion
20: Matrix

## Claims

1. A resin composition comprising a modified hydrogenated product (A) of a block copolymer containing a polymer block (A-1) having a structural unit derived from an aromatic vinyl compound and a polymer block (A-2) having a structural unit derived from a conjugated diene compound, and a polyolefin resin (B), wherein the modified hydrogenated product (A) has one or two or more functional group selected from an alkoxysilyl group, a carboxy group, an amino group, a hydroxy group, an epoxy group, and a group derived from an acid anhydride, and the polymer block (A-2) has a vinyl bond amount of 50 to 99 mol%.

2. The resin composition according to claim 1, wherein the modified hydrogenated product (A) has a glass transition temperature of -30 to +30°C.

3. The resin composition according to claim 1 or 2, wherein the polyolefin resin (B) is at least one resin selected from the group consisting of polypropylene, polyethylene, polymethylpentene, an ethylene-vinyl acetate copolymer, and a homopolymer or copolymer of an α-olefin, and a copolymer of propylene and/or ethylene and an α-olefin.

4. The resin composition according to any one of claims 1 to 3, wherein a content of the polymer block (A-1) in the modified hydrogenated product (A) is 4 to 50% by mass.

5. The resin composition according to any one of claims 1 to 4, wherein the modified hydrogenated product (A) has a weight average molecular weight of 50,000 to 400,000.

6. The resin composition according to any one of claims 1 to 5, wherein the polymer block (A-2) has a hydrogenation

rate of 50 to 99 mol%.

**7.** The resin composition according to any one of claims 1 to 6, wherein a content of the functional group in the modified hydrogenated product (A) is 0.1 to 5.0 phr with respect to the modified hydrogenated product (A).

**8.** The resin composition according to any one of claims 1 to 7, wherein the modified hydrogenated product (A) has a melt flow rate of 1 to 30 g/10 min, measured according to JIS K 7210 (2014) under the conditions of a temperature of 230°C and a load of 21 N.

**9.** The resin composition according to any one of claims 1 to 8, wherein when the mass of the modified hydrogenated product (A) is Aa and the mass of the polyolefin resin (B) is Ba, Aa/Ba is 95/5 to 5195.

**10.** An adhesive agent comprising the resin composition according to any one of claims 1 to 9.

**11.** The resin composition according to any one of claims 1 to 8, further comprising a polar resin (C).

**12.** The resin composition according to claim 11, wherein the polar resin (C) is contained in an amount of 10 to 90% by mass with respect to the total mass of the resin composition.

**13.** The resin composition according to claim 11 or 12, wherein in a matrix of one of the polyolefin resin (B) and the polar resin (C), domains having a mean size of 500 nm or less and containing the other of the polyolefin resin (B) and the polar resin (C) are dispersed.

**14.** The resin composition according to any one of claims 11 to 13, wherein the polar resin (C) is at least one resin selected from the group consisting of a polyamide resin, a polyvinyl alcohol-based resin, a polyester-based resin, and a polycarbonate resin.

**15.** The resin composition according to any one of claims 11 to 14, wherein a peak intensity of a loss tangent (tan $\delta$) at 0 to 50°C is 0.1 to 2.0, when measured in accordance with JIS K 7244-10 (2005) under the conditions of a strain amount of 0.1%, a frequency of 10 Hz, a measurement temperature of -100 to +150°C, and a temperature raising rate of 3°C/min.

**16.** The resin composition according to any one of claims 11 to 15, wherein when the mass of the modified hydrogenated product (A) is Ab and the mass of the polyolefin resin (B) is Bb, Ab/Bb is 30/70 to 1199.

**17.** The resin composition according to any one of claims 11 to 16, wherein when the mass of the polyolefin resin (B) is Bb and the mass of the polar resin (C) is C, Bb/C is 90/10 to 10/90.

**18.** A compatibilizer for compatibilizing a polar resin and a non-polar resin, the compatibilizer comprising a modified hydrogenated product (A) of a block copolymer containing a polymer block (A-1) having a structural unit derived from an aromatic vinyl compound and a polymer block (A-2) having a structural unit derived from a conjugated diene compound, wherein the modified hydrogenated product (A) has one or two or more functional group selected from an alkoxysilyl group, a carboxy group, an amino group, a hydroxy group, an epoxy group, and a group derived from an acid anhydride, and the polymer block (A-2) has a vinyl bond amount of 50 to 99 mol%.

[Fig. 1]

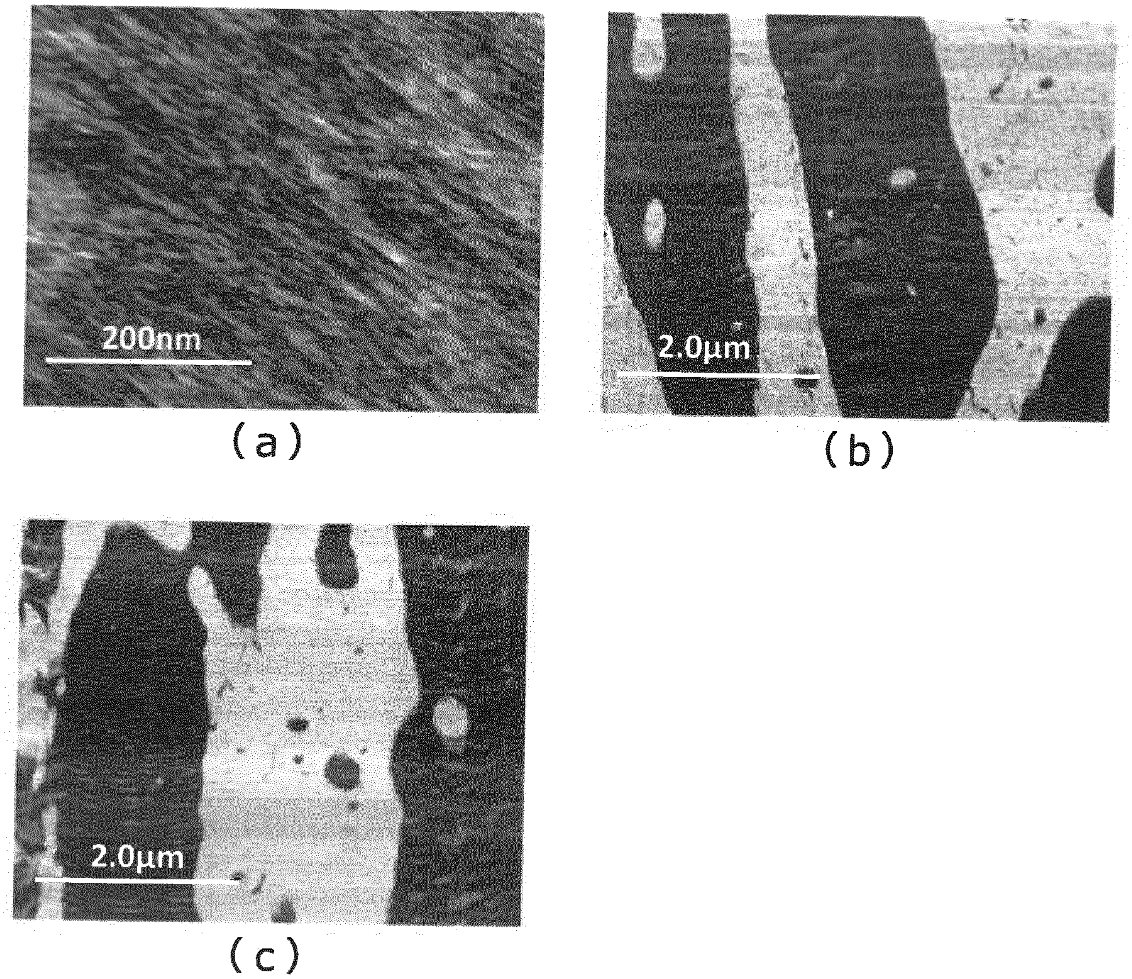


[Fig. 2]

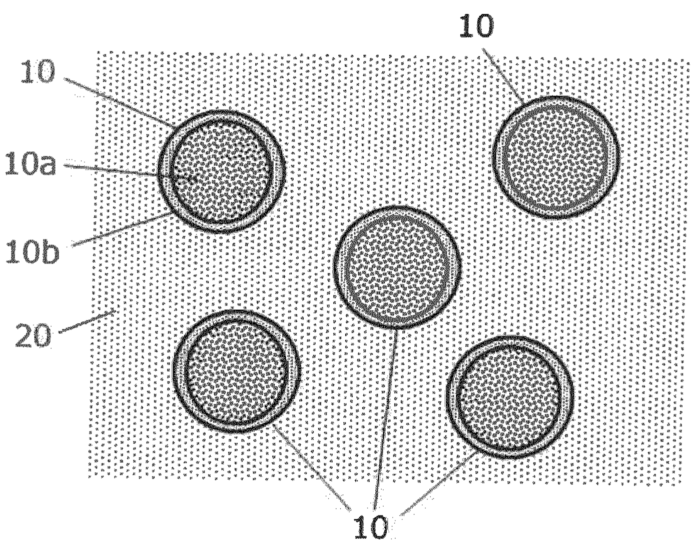

[Fig. 3]

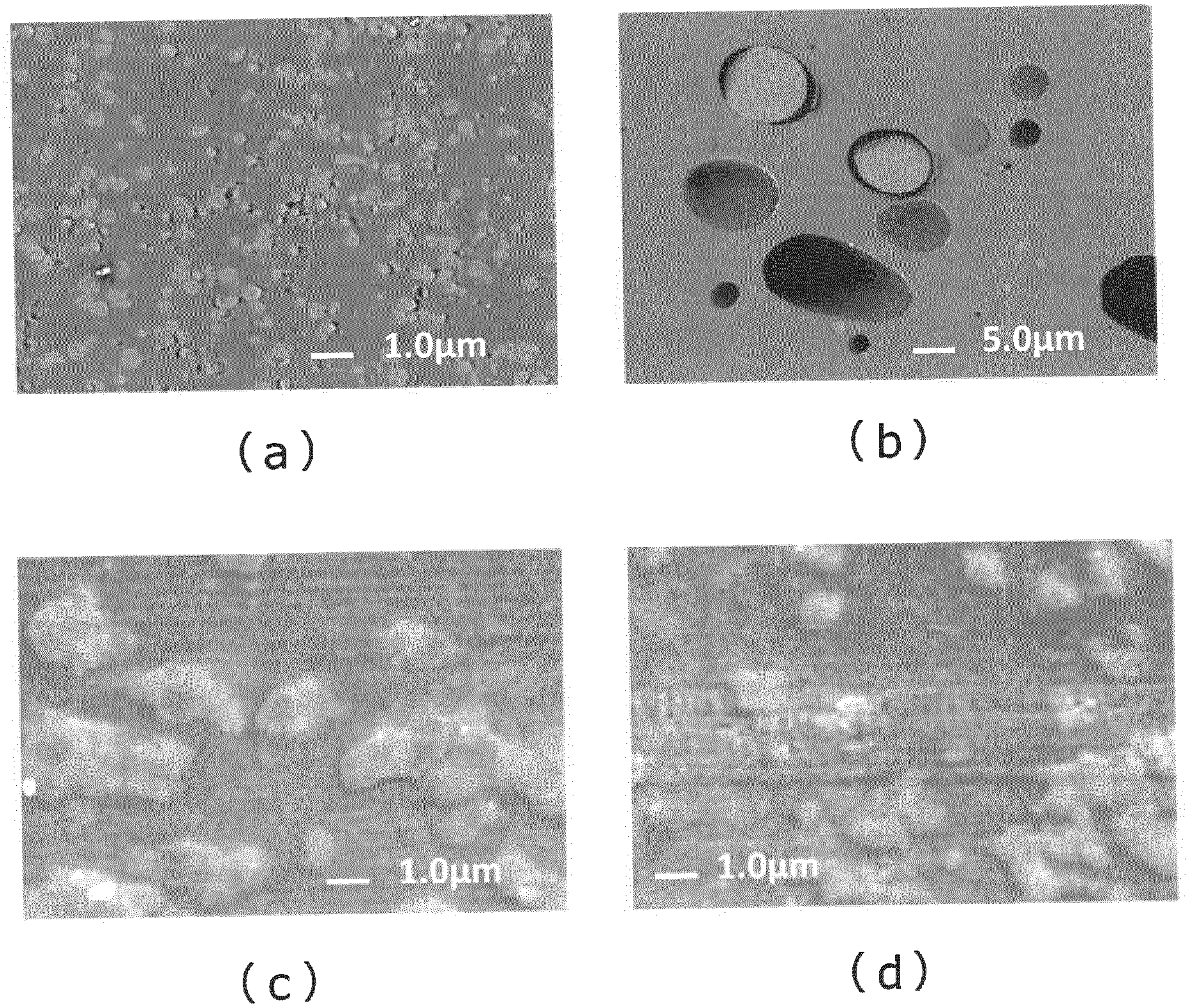

[Fig. 4]

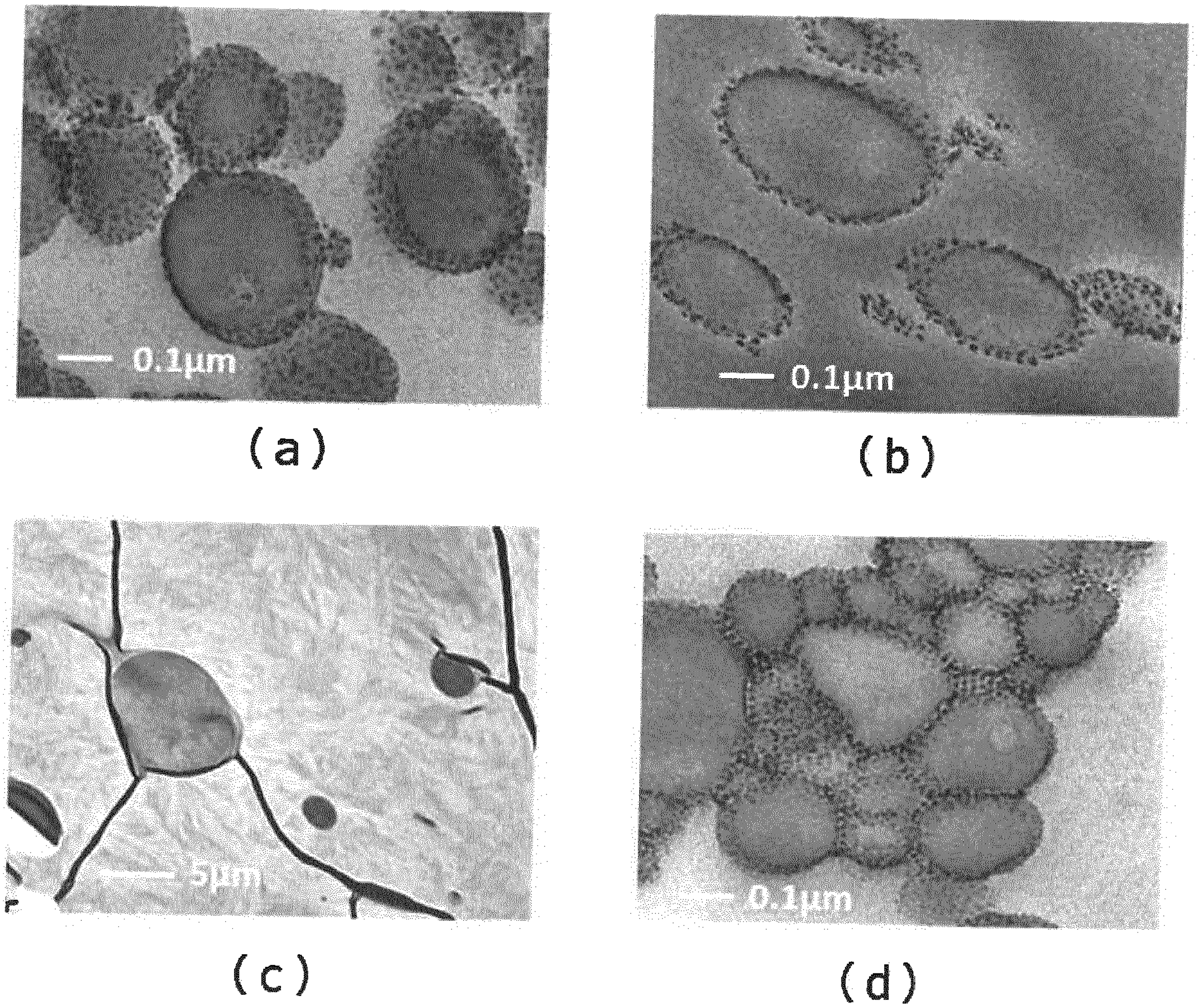

[Fig. 5]

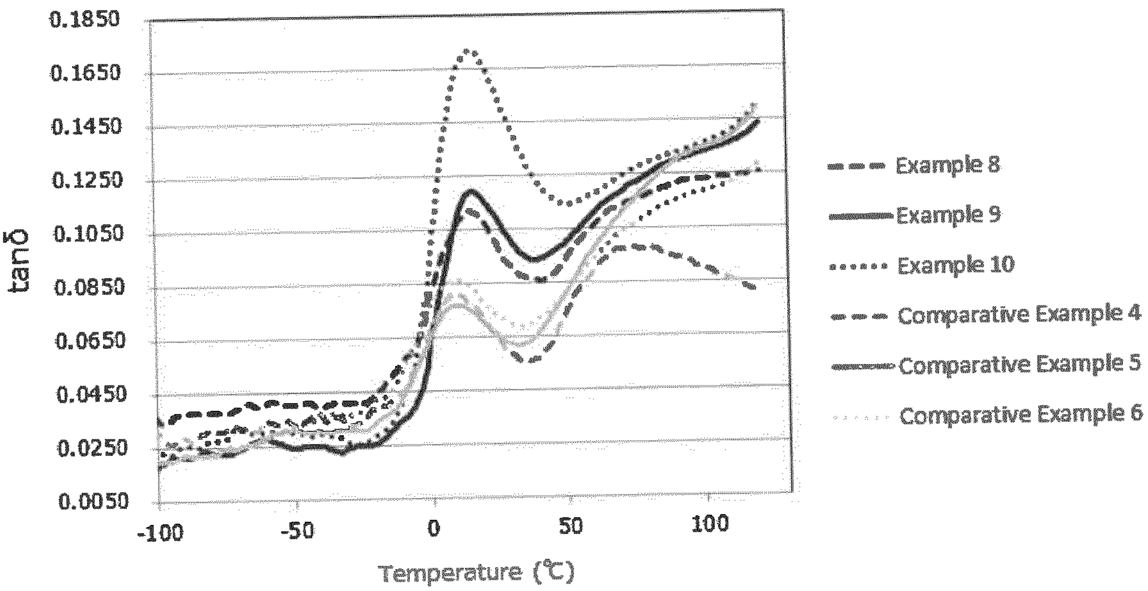
0.1850
0.1650
0.1450
0.1250
0.1050
0.0850
0.0650
0.0450
0.0250
0.0050
tanδ
-100
-50
0
50
100
Temperature (℃)
Example 8
Example 9
Example 10
Comparative Example 4
Comparative Example 5
Comparative Example 6

## INTERNATIONAL SEARCH REPORT

International application No.
**PCT/JP2022/000074**

**A. CLASSIFICATION OF SUBJECT MATTER**

***C08L 23/00***(2006.01)i; ***C08F 8/04***(2006.01)i; ***C08F 297/04***(2006.01)i; ***C08L 53/02***(2006.01)i; ***C09J 123/00***(2006.01)i; ***C09J 153/02***(2006.01)i
FI: C08L23/00; C08L53/02; C08F297/04; C08F8/04; C09J123/00; C09J153/02

According to International Patent Classification (IPC) or to both national classification and IPC

**B. FIELDS SEARCHED**

Minimum documentation searched (classification system followed by classification symbols)

C08L23/00; C08F8/04; C08F297/04; C08L53/02; C09J123/00; C09J153/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2020-189917 A (KURARAY CO) 26 November 2020 (2020-11-26) claims, examples | 1, 3-5, 7, 9 |
| A | | 2, 6, 8, 10-18 |
| P, X | JP 2021-181561 A (ASAHI KASEI CORP) 25 November 2021 (2021-11-25) claims, examples | 1-10 |
| A | JP 3-37287 A (CHISSO CORP) 18 February 1991 (1991-02-18) | 1-18 |
| A | JP 10-279774 A (MITSUBISHI CHEM CORP) 20 October 1998 (1998-10-20) | 1-18 |
| A | JP 63-254119 A (ASAHI CHEMICAL IND) 20 October 1988 (1988-10-20) | 1-18 |
| A | JP 2005-15528 A (ASAHI KASEI CHEMICALS CORP) 20 January 2005 (2005-01-20) | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2022** | **29 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/000074**

| Patent document cited in search report | Publication date (day/month/year) | Patent family member(s) | Publication date (day/month/year) |
|---|---|---|---|
| JP 2020-189917 A | 26 November 2020 | (Family: none) | |
| JP 2021-181561 A | 25 November 2021 | (Family: none) | |
| JP 3-37287 A | 18 February 1991 | US 5319016 A<br>EP 406828 A1<br>KR 10-1991-0003057 A<br>CA 2019245 A1 | |
| JP 10-279774 A | 20 October 1998 | US 6214476 B1<br>EP 857758 A1<br>AU 5302798 A | |
| JP 63-254119 A | 20 October 1988 | (Family: none) | |
| JP 2005-15528 A | 20 January 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017169814 A
- JP 2013147645 A
- JP 2013147648 A
- WO 2017094738 A
- JP H6234897 A
- JP 2011132298 A